(19) Europäisches Patentamt / European Patent Office / Office européen des brevets

(11) **EP 4 722 991 A1**

(12) **EUROPEAN PATENT APPLICATION**

(43) Date of publication:
08.04.2026 Bulletin 2026/15

(21) Application number: 24306625.5

(22) Date of filing: 03.10.2024

(51) International Patent Classification (IPC):
**G06N 10/20** *(2022.01)* **G06N 10/40** *(2022.01)*
**G06F 111/10** *(2020.01)* **G06F 30/20** *(2020.01)*

(52) Cooperative Patent Classification (CPC):
**G06N 10/40; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Alice & Bob**
75015 Paris (FR)
• **Ecole Nationale Superieure des Mines de Paris**
75006 Paris (FR)

(72) Inventors:
• **GUILMIN, Pierre**
75015 Paris (FR)
• **PERONNIN, Théau**
75015 Paris (FR)
• **ROUCHON, Pierre**
75006 Paris (FR)
• **TILLOY, Antoine**
75006 Paris (FR)

(74) Representative: **Atout PI Laplace**
**Immeuble Up On**
**25 Boulevard Romain Rolland**
**CS 40072**
**75685 Paris Cedex 14 (FR)**

(54) **METHOD AND UNIT FOR CHARACTERIZING A QUANTUM SYSTEM**

(57) There is provided a method of characterizing a quantum system (1), wherein the quantum system comprises one or more qubit-hosting structure(s) (6), each of the one or more qubit-hosting structure(s) comprising: (I) at least one portion (9) configured to have at least one physical oscillatory mode, (II) one or more signal generator(s) (11,13) coupled to the at least one portion and configured to input control signals to physically prepare the quantum system in a dynamical configuration, and (III) a detector (8) coupled to the at least one resonant portion and configured to measure continuous signals output from the at least one oscillatory mode to provide measurement signals from the quantum system. The method comprises:(i) physically preparing, with the one or more signal generator(s), the quantum system in a first dynamical configuration, wherein the first dynamical configuration is describable via a first stochastic master equation having a first plurality of physical parameters; (ii) physically measuring, with the detector, a continuous signal from the quantum system in the first dynamical configuration to provide a first measured continuous signal; (iii) repeating steps (i) and (ii) a plurality of times to provide a plurality of first measured continuous signals, and calculating one or more first correlation function(s) from the plurality of first measured continuous signals; (iv) physically preparing, with the one or more signal generator(s), the quantum system in a second dynamical configuration which is different to the first physical configuration, wherein the second dynamical configuration is describable via a second stochastic master equation having a second plurality of physical parameters, and wherein the quantum system is physically prepared in the second dynamical configuration such that a subset of the second plurality of physical parameters is a shared subset with a subset of the first plurality of physical parameters; (v) physically measuring, with the detector, a continuous signal from the quantum system in the second dynamical configuration to provide a second measured continuous signal; (vi) repeating steps (iv) and (v) a plurality of times to provide a plurality of second measured continuous signals, and calculating one or more second correlation function(s) from the plurality of second measured continuous signals; (vii) assigning values to the shared subset of physical parameters which characterizes the quantum system by jointly numerically fitting: (a) a first simulation of the one or more first correlation function(s), numerically simulated from the first stochastic master equation, to the calculated one or more first correlation function(s), and (b) a second simulation of the one or more second correlation function(s), numerically simulated from the second stochastic master equation, to the one or more second correlation function(s). There is also provided a quantum characterization unit doing same.

EP 4 722 991 A1

603                                    605

| Prepare 1st dynamical configuration (1st SME) | → | Measure continuous signal | → | Repeat 601 & 603, and calculate 1st correlation function(s) |

601

609                                    611

| Prepare 2nd dynamical configuration (2nd SME) | → | Measure continuous signal | → | Repeat 607 & 609, and calculate 2nd correlation function(s) |

Repeat N times

607                                                                                    619

| Simulate 1st correlation function(s) from the 1st SME | → | Simulate 2nd correlation function(s) from the 2nd SME |

613                                    615                                    621

| Fit simulations to the calculated 1st and 2nd correlation function(s) |

Fit the N simulations to the N correlation function(s)

617

# Fig. 6

**Description**

FIELD OF THE INVENTION

The invention concerns a method of characterizing a quantum system measured continuously, and in particular characterizing a quantum system for stabilizing one or more bosonic qubits, as well as a quantum characterization unit for doing same.

BACKGROUND

Characterising the dynamics of a quantum system is a fundamental task in experimental quantum physics. Typically, a series of hand-crafted measurements are performed in a precise order to estimate the value of each system parameter in turn. However, as quantum technologies mature, this approach is no longer efficient to characterize increasingly large and complex systems, such as recent demonstrations of quantum error correction embedding multiple superconducting qubits in a surface code or stabilisation of bosonic qubits using continuous variable encodings which leverage relatively large Hilbert space dimensions.

In particular, continuous variable encodings, involving superpositions of specific harmonic oscillator states with infinite-dimensional Hilbert spaces (e.g., bosonic qubits such as GKP qubits, Fock states, cat qubits), show promise for protecting and processing quantum information efficiently with lower overhead resources compared to discrete variable systems with finite-dimensional spaces.

Specifically stabilized cat qubits (which can be hosted in superconducting resonators) benefit from a noise bias, where bit-flip errors are exponentially suppressed with the average number of bosons (normally photons) in the so-called Schrödinger cat states hosted in a resonator. This suppression is effective for a wide range of physical noise processes, including photon loss, thermal excitations, photon dephasing, and nonlinearities from Josephson junctions.

Recent experiments in quantum superconducting circuits have demonstrated this exponential suppression of bit-flip errors. However, such experiments have also demonstrated difficulties in accurately characterizing the physical parameters of such highly dynamically non-linear quantum systems. For instance, Berdou, Camille, et al. "One hundred second bit-flip time in a two-photon dissipative oscillator." PRX Quantum 4.2 (2023): 020350 discloses a method of characterizing the photon number $\alpha^2$ in a two-photon dissipative oscillator, the associated two-photon dissipation rate $\kappa_2$ and a term $\alpha_2$ arising from and proportional to the amplitude of an external drive. However, a specifically designed sequence of separate experiments, including measuring the variance of the measured signal $\mathrm{E}\left[I_k^2\right]$ for various values of $\alpha_2$ (where $I_k$ is the discrete-time digitised signals resulting from detector signals of the continuous-time analogue signals from the oscillator) was required to characterise these three parameters, with a resulting uncertainty on each estimate being larger than 10%.

Bayesian inference is a method for estimating parameters from continuous measurement data, such as disclosed Mabuchi, Hideo. "Dynamical identification of open quantum systems." Quantum and SemiclassicalOptics: Journal of the European Optical Society Part 8 8.6 (1996): 1103. These make optimal use of the available information by selecting parameters that maximise the likelihood of the observed data, e.g. by computing the trace of the solution to the linear stochastic master equation (SME), which is solved using the measured signal. However, the numerical cost is prohibitive for estimating many parameters, and they do not take into account signal filtering and digitisation.

Tilloy, Antoine. "Exact signal correlators in continuous quantum measurements." Physical Review A 98.1 (2018): 010104 discloses an exact formula for calculating correlation functions of detectors continuously measuring an arbitrary quantum system, in the presence of detection imperfections, for diffusive measurement. Guilmin, Pierre, Pierre Rouchon, and Antoine Tilloy. "Correlation functions for realistic continuous quantum measurement." IFAC-PapersOnLine 56.2 (2023): 5164-5170 discloses similar exact formula for calculating correlation functions, but generalized to quantum jump measurements. However, both disclosures only present theoretical derivations of formulae for computing correlation functions directly from the theoretical dynamical model (the stochastic master equation) and the theoretical initial state of an arbitrary quantum system.

Thus, a major challenge to streamline the development of any of the above technologies is to find characterization methods that (i) facilitate the automated estimation of many parameters, and (ii) remain practical for everyday use in the laboratory. Moreover, successful operation of a quantum processor requires regular recalibration routines to bring the delicate quantum systems back into operability regimes. Such routines require rapid and accurate characterization of the quantum systems in order to apply effective correcting calibration operations.

This invention aims to address one or more of the aforementioned problems to provide an improved method of characterizing a quantum system.

SUMMARY

In a first aspect, there is provided a method of characterizing a quantum system, wherein the quantum system comprises one or more qubit-hosting structure(s), each of the one or more qubit-hosting structure(s) comprising: (I) at least one portion configured to have at least one physical oscillatory mode, (II) one or more signal generator(s) coupled to the at least one portion and configured to input control signals to physically prepare the quantum system in a dynamical configuration, and (III) a detector coupled to the at least one resonant portion and configured to measure continuous signals output from the at least one oscillatory mode to provide measurement signals from the quantum system.

The method comprises: (i) physically preparing, with the one or more signal generator(s), the quantum system in a first dynamical configuration, wherein the first dynamical configuration is describable via a first stochastic master equation having a first plurality of physical parameters; (ii) physically measuring, with the detector, a continuous signal from the quantum system in the first dynamical configuration to provide a first measured continuous signal; (iii) repeating steps (i) and (ii) a plurality of times to provide a plurality of first measured continuous signals, and calculating one or more first correlation function(s) from the plurality of first measured continuous signals; (iv) physically preparing, with the one or more signal generator(s), the quantum system in a second dynamical configuration which is different to the first physical configuration, wherein the second dynamical configuration is describable via a second stochastic master equation having a second plurality of physical parameters, and wherein the quantum system is physically prepared in the second dynamical configuration such that a subset of the second plurality of physical parameters is a shared subset with a subset of the first plurality of physical parameters; (v) physically measuring, with the detector, a continuous signal from the quantum system in the second dynamical configuration to provide a second measured continuous signal; (vi) repeating steps (iv) and (v) a plurality of times to provide a plurality of second measured continuous signals, and calculating one or more second correlation function(s) from the plurality of second measured continuous signals; (vii) assigning values to the shared subset of physical parameters which characterizes the quantum system by jointly numerically fitting: (a) a first simulation of the one or more first correlation function(s), numerically simulated from the first stochastic master equation, to the calculated one or more first correlation function(s), and (b) a second simulation of the one or more second correlation function(s), numerically simulated from the second stochastic master equation, to the one or more second correlation function(s).

Thus, the method according to the present invention measures continuous signals of a quantum system in different dynamical configurations, and subsequently fits the statistics of the measured signals (in the form of correlation functions, which leverages temporal information from the correlation functions at non-coincident time) to efficient numerical simulations so as to extract the values of the physical parameters which characterize the quantum system.

In contrast to prior art methods which aim to make optimal use if the available information from observed data (e.g. via computationally expensive maximum likelihood methods), the present method instead directly fits statistics of the observed experimental data with numerically simulated statistics in the form of correlation functions from a continuous signal, and without necessarily trying to reconstruct intermediate quantities such as the quantum state.

Although the present method does not make optimal use of the available information in a mathematical sense, the present Inventors have discovered that the experimental processing (namely the physical measurements) is particularly straightforward and the fitting procedure is both easy to implement numerically, and extremely efficient in that it allows for the simultaneous estimation of multiple parameters and is suitable for large Hilbert space dimensions.

Moreover, the present method physically prepares and measures the quantum system in different dynamical configurations so as to extract physical parameters which characterize the quantum system and is shared between the different dynamical configurations. The present Inventors have discovered that, when some physical parameters are not observable through the continuous signal of a given dynamical configuration (e.g. have no effect on the measured signals average), then they can be hidden by some symmetry of the quantum system. These occur when the physical parameter is fundamentally unobservable, or when it has too small an effect on the continuous signal to be estimated with good precision. However, the present Inventors have recognized that for typical quantum systems, any generic physical parameter will influence in different ways the continuous signal between different dynamical configurations of the quantum system. By physically preparing and measuring the quantum system in different dynamical configurations, wherein the difference between second dynamical configuration and the first dynamical configuration is known (e.g. the second dynamical configuration may be another known "initial" state, or a configuration obtained from the first dynamical configuration by modifying a signal with a known proportionality constant), the present method crucially ensures that physical parameters are extracted which otherwise would be hidden.

Thus, the synergistic combination of both (i) measuring continuous signals of a quantum system and numerically fitting correlation functions thereto in an efficient manner, and (ii) doing so in different dynamical configurations of the quantum system to ensure all physical parameters are observable, presents a new tool for characterizing quantum systems. This method may be particularly suitable for automating the characterization phase of a quantum system due to the increased speed of the characterization method relative to prior art processes, and because it allows the operator of the quantum system to characterize many parameters in a single physical experiment. Furthermore, the present method enables an inherently interpretable characterization process, in that an operator can build intuition on how each physical parameter affects the average trajectories of the continuous signal of the quantum system.

For the avoidance of doubt, the first simulation is a simulation of the one or more first correlation function(s) for the first dynamical configuration and the second simulation is a simulation of the one or more second correlation function(s) for the second dynamical configuration.

Assigning values to the shared subset of physical parameters may thus comprise: (viii) numerically simulating, from the first stochastic master equation, a plurality of the one or more first correlation function(s), wherein at least one physical parameter of the first plurality of physical parameters has a different value when numerically simulating each of the simulated one or more first correlation function(s); (iv) numerically simulating, from the second stochastic master equation, a plurality of simulations of the one or more second correlation function(s), wherein at least one physical parameter of the second plurality of physical parameters has a different value when numerically simulating each of the simulations of the one or more second correlation function(s); and (x) assigning values to the shared subset of physical parameters which characterizes the quantum system by fitting the plurality of simulations of the one or more first correlation functions of step (viii) to the calculated one or more first correlation functions of step (iii) and fitting the plurality of simulations of the one or more second correlation functions of step (ix) to the calculated one or more first correlation functions of step (vi).

Said otherwise, numerically fitting a simulated correlation function with the corresponding measured correlation function may be achieved by (a) simulating the correlation function for an initial choice of physical parameters, (b) comparing this simulated correlation function with the corresponding measured correlation function and quantifying how close it fits, (c) simulating the correlation function for a different choice of physical parameters, (d) comparing this simulated correlation function with the corresponding measured correlation function and quantifying how close it fits, and (e) iterating until the quantification of how close one of the simulated correlation functions is to the corresponding measured correlation function is below a certain fit threshold. The choice of physical parameters for the final fitted simulated correlation functions is then taken to be the physical parameters of the measured correlation function.

Thus, values for the shared subset of physical parameters is extracted and assigned by (A) fitting the plurality of simulations of the one or more first correlation functions to the calculated one or more first correlation functions from the plurality of first measured continuous signals and (B) fitting the plurality of simulations of the one or more second correlation functions to the calculated one or more second correlation functions from the plurality of second measured continuous signals.

Numerically fitting the first and second simulations may comprise performing a least-squares fitting procedure.

Preferably, numerically simulating, from the first (respectively second) stochastic master equation, a plurality of the one or more first (respectively second) correlation function(s) comprises numerically simulating the plurality of the one or more first (respectively second) correlation function(s) directly from the first (respectively second) stochastic master equation without sampling a plurality of trajectories. Here, sampling a plurality of trajectories means explicitly calculating the correlation function(s) by averaging over all realizations.

Preferably, each of the plurality of first (respectively second) measured continuous signals is a filtered or binned signal, and numerically simulating, from the first (respectively second) stochastic master equation, a plurality of the one or more first (respectively second) correlation function(s) comprises numerically simulating the plurality of the one or more first (respectively second) correlation function(s) of filtered or binned signals.

The one or more signal generator(s) may be directly coupled to the at least one portion, or may be indirectly coupled to the at least one portion (for instance by being coupled to another element or structure of the qubit-hosting structure such as a non-linear element, wherein said other element or structure is itself directly coupled to the at least one portion).

The detector may be directly coupled to the at least one resonant portion, or may be indirectly coupled to the at least one portion (for instance by being coupled to another element or structure of the qubit-hosting structure such as a non-linear element, wherein said other element or structure is itself directly coupled to the at least one portion).

By continuous signal herein it is meant time-continuous signal.

The method may comprise: physically preparing, with the one or more signal generator(s), the quantum system in a third or further different dynamical configurations, wherein each of the third or further different dynamical configurations is describable via a third or further stochastic master equation having a third or further plurality of physical parameters, and wherein the quantum system is physically prepared in the third or further different dynamical configuration such that a subset of the third or further second plurality of physical parameters is part of the shared subset of physical parameters; physically measuring, with the detector, a continuous signal from the quantum system in the third or further different dynamical configurations to provide a third or further measured continuous signal; repeating said steps of physically preparing and physically measuring the third or further different dynamical configurations a plurality of times to provide a plurality of the third or further measured continuous signals, and calculating one or more third or further correlation function(s) from the plurality of the third or further measured continuous signals; and wherein assigning values to the shared subset of physical parameters which characterizes the quantum system further comprises numerically fitting a third or further simulation, numerically simulated from the third or further stochastic master equation, to the one or more third or further correlation function(s).

The present inventors have discovered that characterizing the quantum system in at least 3 different dynamical configurations improves the numerical quality of the fit, improves numerical resolution, and may lift further statistical degeneracies amongst the physical parameters. Moreover, the greater the number of different configurations, the less likely the scenario of overfitting.

One or more correlation function(s) may be comprised of: one-point correlation functions, two-point correlation functions, and/or three-point correlation functions.

Using such low-order correlation functions enables the experimental sampling to be performed in an affordable measurement time and/or numerical sampling to be numerically affordable.

The one or more correlation function(s) may comprise fourth- or higher-order correlation functions.

A fourth-order correlation function is a four-point correlation function. In some embodiments, using four-point correlation functions may result in higher precision/resolution in fitting parameters, and in particular may further help to distinguish so-called low-order degeneracy which are not a fundamental non-identifiability (wherein the chosen set of correlation functions is not sufficient to estimate all the parameters e.g. indistinguishable due to the error tolerances of physical measurement).

At least one of the physically prepared dynamical configurations may be a steady state of the quantum system, and wherein repeating said steps of physically preparing and physically measuring the quantum system in the steady state a plurality of times may comprise: physically maintaining, with the one or more signal generator(s), the quantum system in the steady state for a single trajectory; physically measuring, with the detector, a continuous signal from the quantum system in the steady state to provide a steady state measured continuous signal; and dividing the steady state measured continuous signal into a plurality of sub-portions, and calculating the corresponding one or more correlation function(s) from the plurality of sub-portions.

As will be appreciated, this may advantageously reduce the physical measurement time.

By at least one of the physically prepared dynamical configurations being a steady state of the quantum system means that the quantum system is physically prepared in a dynamical configuration which is a steady state. For instance, the first dynamical configuration may be a steady state, and/or the second dynamical configuration may be a steady state, and/or one or more of the third or further dynamical configurations may be a steady state.

At least one of the physically prepared dynamical configurations may be a steady state of the quantum system such that the stochastic master equation describing said at least one of the dynamical configurations has a time-constant Liouvillian $\mathcal{L}$; the method may comprise: defining a plurality of n time-bins of width $\Delta t$ from the measured continuous signal from said at least one of the dynamical configurations, wherein the width $\Delta t$ is a digitisation time of the acquisition chain of the detector; wherein numerically fitting the simulations of the one or more correlation function(s) of the steady state, the one or more correlation function(s) being $n$-point correlation function(s), comprises calculating the trace of an operator obtained by numerically evolving a numerically simulated initial state of the quantum system $\rho_0$ with a Lindblad evolution interspersed with the application of a correlation superoperator at the center $t'_k$ of each $k$-th time-bin from $t'_1$ to $t'_n$: $\mathbb{E}\left[ I_{t'_1} \dots I_{t'_n} \right] =$

$$Tr\left[ \mathcal{C}_L e^{(t'_n - t'_{n-1})\mathcal{L}} \dots \mathcal{C}_L e^{t'_1 \mathcal{L}}(\rho_0) \right],$$

wherein $L$ is the jump operator of the stochastic master equation describing said at least one of the dynamical configurations, $t'_k = k\Delta t + \Delta t/2$, and $\mathcal{C}_L$ $(O)$ is the correlation superoperator for an operator $0$ and defined either by: (i) $\mathcal{C}_L$ $(O) = \theta O + \eta L O L^\dagger$ if the detector has binary output with dark count rate $\theta \geq 0$ and detector efficiency and $0 < \eta \leq 1$, such that the stochastic master equation describing the steady state is of the jump type; or (ii)

$$\mathcal{C}_L(O) = \sqrt{\eta}(LO + OL^\dagger)$$

if the detector has continuous output with detector efficiency and $0 < \eta \leq 1$, such that the stochastic master equation describing the steady state is of the diffuse type.

This approximation is particularly numerically efficient, with the numerical cost being the same a numerically solving a single Lindblad master equation, up to the final "correlation time" $t'_n$ being the center of the final time-bin.

Alternatively, at least one of the physically prepared dynamical configurations need not be a steady state of the quantum system, but rather a given prepared non-steady state dynamical configuration. In this case, that the stochastic master equation describing said given prepared non-steady state dynamical configuration has a time-dependent Liouvillian having a particular form at each k-th time-bin from $t'_1$ to $t'_n$ ($\mathcal{L}_{t'_1}, \ldots, \mathcal{L}_{t'_n}$), such that the simulated correlation function is given by $\mathbb{E}\left[I_{t'_1} \ldots I_{t'_n}\right] =$

$$Tr\left[\mathcal{C}_{L_{t'_n}} e^{(t'_n - t'_{n-1})\mathcal{L}_{t'_n}} \ldots \mathcal{C}_{L_{t'_1}} e^{t'_1 \mathcal{L}_1}(\rho_0)\right],$$

with

$$\mathcal{C}_{L_{t'_k}}(O)$$

is the correlation superoperator being also calculated at each *k*-th time-bin in view of any time dependence of the jump operators, dark count rates, or detector efficiencies.

At least one of the physically prepared dynamical configurations may be a steady state of the quantum system such that the stochastic master equation describing said at least one of the dynamical configurations has a time-constant Liouvillian $\mathcal{L}$; the method may comprise: defining a plurality of *n* time-points from the measured continuous signal from said at least one of the dynamical configurations; wherein numerically fitting the simulations of the one or more correlation function(s) of the steady state, the one or more correlation function(s) being *n*-point correlation function(s), comprises computing the n-dimensional integral of $\mathbb{E}\left[I_{t_1} \ldots I_{t_n}\right]$ against a transfer function $f_n(t_n)$ of the acquisition chain of the detector for the *n*-th time-point, $\mathbb{E}\left[I_{f_1} \ldots I_{f_n}\right] = \int_{t_1} \ldots \int_{t_n} \mathbb{E}\left[I_{t_1} \ldots I_{t_n}\right] f_n(t_n) \ldots f_n(t_n) dt_1 \ldots dt_n$, wherein $\mathbb{E}\left[I_{t_1} \ldots I_{t_n}\right]$ is obtained by calculating the trace of an operator obtained by numerically evolving a numerically simulated initial state of the quantum system $\rho_0$ with a Lindblad evolution interspersed with the application of a correlation superoperator at each time-point from $t_1$ to $t_n$:

$$\mathbb{E}\left[I_{t_1} \ldots I_{t_n}\right] = Tr\left[\mathcal{C}_L e^{(t_n - t_{n-1})\mathcal{L}} \ldots \mathcal{C}_L e^{t_1 \mathcal{L}}(\rho_0)\right],$$

wherein *L* is the jump operator of the stochastic master equation describing said at least one of the dynamical configurations, and $\mathcal{C}_L(O)$ is the correlation superoperator for an operator *O* and defined either by: (i) $\mathcal{C}_L(O) = \theta O + \eta LOL^{\dagger}$ if the detector has binary output with dark count rate $\theta \geq 0$ and detector efficiency and $0 < \eta \leq 1$, such that the stochastic master equation describing the steady state is of the jump type; or (ii)

$$\mathcal{C}_L(O) = \sqrt{\eta}(LO + OL^{\dagger})$$

(O) if the detector has continuous output with detector efficiency and $0 < \eta \leq 1$, such that the stochastic master equation describing the steady state is of the diffuse type.

In particular, this provides numerically exact results, particularly suitable for numerically simulating one-point and two-point correlation functions.

The sharp signal *n*-dimensional correlation function $\mathbb{E}\left[I_{t_1} \ldots I_{t_n}\right]$ may for instance be integrated against a rectangular approximation of the $f_n(t_n)$. That is wherein transfer function $f_t$ of the acquisition chain of the detector at time-point *t* is approximated by a rectangular function of width $\Delta t$, wherein the width $\Delta t$ is a digitisation time of the acquisition chain of the detector.

Integrating against the rectangular approximation may for instance comprise integrating using Gaussian quadratures.

Alternatively, at least one of the physically prepared dynamical configurations need not be a steady state of the quantum system, but rather a given prepared non-steady state dynamical configuration. In this case, that the stochastic master equation describing said given prepared non-steady state dynamical configuration has a time-dependent Liouvillian having a particular form at each $n$-th time-point from $t_1$ to $t_n$ ($\mathcal{L}_{t_1}, \ldots, \mathcal{L}_{t_n}$), such that the simulated correlation function is given by $\mathbb{E}\left[I_{t_1} \ldots I_{t_n}\right] =$

$$Tr\left[\mathcal{C}_{L_{t_n}} e^{(t_n - t_{n-1})\mathcal{L}_{t_n}} \ldots \mathcal{C}_{L_{t_1}} e^{t_1 \mathcal{L}_1}(\rho_0)\right],$$

with

$$\mathcal{C}_{L_{t_n}}(O)$$

is the correlation superoperator being also calculated at each $n$-th time-point in view of any time dependence of the jump operators, dark count rates, or detector efficiencies.

In embodiments, numerically fitting at least one of the simulations of the one or more correlation function(s) of a given one of the dynamical configurations, the one or more correlation function(s) being n-point correlation function(s), comprises: defining a plurality of $n$ time-points from the corresponding measured continuous signal from the given dynamical configuration; assigning a transfer function $f_t$ of the acquisition chain of the detector at time-point $t$; defining $j = \alpha_1 f_1 + \cdots + \alpha_n f_n$ with $\{\alpha_1, \ldots, \alpha_n\}$ real numbers; deriving a system of $2^n$ coupled ordinary differential equations by forward differentiating an ordinary differential equation $d\rho_t^j / dt = \mathcal{L}_t^j(\rho_t^j)$, such that the system of $2^n$ coupled ordinary differential equations is describable by: $\dfrac{d\rho_t^{1,\ldots,n}}{dt} = \left.\dfrac{\partial^n\left(\mathcal{L}_t^j(\rho_t^j)\right)}{\partial\alpha_1 \ldots \partial\alpha_n}\right|_{\alpha_1,\ldots,\alpha_n = 0}$, wherein $\rho_t^j$ is a generating density matrix at time-point $t$, and $\mathcal{L}_t^j$ is a superoperator defined either by: (i)

$$\mathcal{L}_t^j = \mathcal{L}_t + (e^{jt} - 1)\mathcal{C}_L$$

if the stochastic master equation describing the given dynamical configuration is of the jump type, $\mathcal{C}_L(O)$ is a correlation superoperator for an operator $O$ defined $\mathcal{C}_L(O) = \theta O + \eta L O L^\dagger$ if the detector has binary output with dark count rate $\theta \geq 0$ and detector efficiency and $0 < \eta \leq 1$, or (ii) $\mathcal{L}_t^j = \mathcal{L}_t + j_t \mathcal{C}_L + j_t^2 / 2 \, \mathcal{J}$ if the stochastic master equation describing the given dynamical configuration is of the diffusive type, with $\mathcal{J}$ the identify operator, and $\mathcal{C}_L(O)$ is a correlation superoperator for an operator $O$ defined

$$\mathcal{C}_L(O) = \sqrt{\eta}(LO + OL^\dagger)$$

if the detector has continuous output with detector efficiency and $0 < \eta \leq 1$; solving the system of $2^n$ coupled ordinary differential equations from time $t = 0$ to time $T$, where $T$ is chosen to be greater than any time in the support of $f_1, \ldots, f_n$, to thereby compute $\rho_T^{1,\ldots,n}$; and calculating the trace of $\rho_T^{1,\ldots,n}$ to provide the simulations of the one or more correlation function(s) $\mathbb{E}\left[I_{f_1} \ldots I_{f_n}\right] = Tr\left[\rho_T^{1,\ldots,n}\right]$.

This is a particularly numerically efficient approach, and for low-order correlation functions has a numerical cost which is the same as solving a few Lindblad master equations up to time $T$.

The transfer function $f_t$ of the acquisition chain of the detector at time-point $t$ may be approximated by a rectangular function of width $\Delta t$, wherein the width $\Delta t$ is a digitisation time of the acquisition chain of the detector.

In embodiments wherein transfer function $f_t$ of the acquisition chain of the detector at time-point $t$ is approximated by a rectangular function of width $\Delta t$, the height of the rectangular function may be defined by gain $G$ of the detector acquisition chain. This parameter gain $G$ may be estimated independently from the characterization method described herein (i.e. without explicitly preparing more than one dynamical configuration). For instance, estimating gain $G$ may comprise: preparing a single dynamical configuration by letting the quantum system relax to vacuum state (e.g., by

not applying any control signals at all with the one or more signal generator(s)); detecting a continuous signal with the detector; and fitting autocorrelation functions of the measured signal (wherein an autocorrelation function is correlation function of the signal with itself at different times). Thus, the method may comprise independently estimating gain $G$, wherein the gain $G$ is therefore not a physical parameter of the shared subset of physical parameters.

The quantum system, in one of the physically prepared dynamical configurations, may be described by a Liouvillian $\mathcal{L}$. Moreover, the quantum system may be physically prepared in said dynamical configuration such that has a symmetry superoperator $\mathcal{S}$ which commutes with the system's Liouvillian $[\mathcal{L}, \mathcal{S}] = 0$ and which anti-commutes with the signal correlation superoperator $\{\mathcal{C}_L, \mathcal{S}\} = 0$. In this embodiment, the method comprises: calculating only one or more non-null correlation function(s) from said dynamical configuration which are even-order correlation functions; and numerically simulating from the stochastic master equation of said dynamical configuration only one or more even-order correlation function(s).

For instance, the symmetry superoperator may be the parity superoperator $\mathcal{S} \equiv \mathcal{P}(\rho) = e^{i\pi a\dagger a}\rho e^{-i\pi\dagger a}$ in the case of the cat-qubit systems where $a$ denotes the annihilation operator of the physical oscillatory mode a.

In embodiments, for each of the one or more qubit-hosting structure(s), the at least one portion is a resonant portion configured to have at least one resonant physical oscillatory mode, each of the one or more qubit-hosting structure(s) further comprises a non-linear element coupled to the at least one resonant portion so as to non-linearly couple to the at least one resonant physical oscillatory mode, and wherein the one or more signal generator(s) are coupled to the at least one resonant portion and/or to the non-linear element, and the detector is coupled to the at least one resonant portion or to the non-linear element and configured to measure continuous signals output from the at least one resonant physical oscillatory mode to provide measurement signals from the quantum system.

The quantum system may be for hosting cat qubit; wherein at least one of the one or more qubit-hosting structure(s) is a cat-qubit-hosting structure; wherein the at least one resonant portion is configured to have a first resonant physical oscillatory mode and a second resonant physical oscillatory mode; wherein the non-linear element coupled to the at least one resonant portion is configured to non-linearly couple the first resonant physical oscillatory mode and the second resonant physical oscillatory mode such that, under input control signals to the non-linear element, a two-to-one boson exchange is engineered between the first resonant physical oscillatory mode and the second resonant physical oscillatory mode; wherein a signal generator of the one or more signal generator(s) is coupled to the at least one resonant portion, said signal generator being configured to drive the second resonant physical oscillatory mode; and wherein the detector is coupled to the at least one resonant portion and configured to measure continuous signals output from the second resonant physical oscillatory mode.

As will be understood, by engineering a two-to-one boson exchange between the first resonant physical oscillatory mode and the second resonant physical oscillatory mode, under further input control signals to the at least one resonator portion, the quantum system may be physically prepared in a dynamical configuration wherein a cat-qubit is hosted in the first resonant physical oscillatory mode of the least one resonant portion. That is, the first mode may be the "memory" mode discussed herein, and the second mode may be the "buffer" mode discussed herein.

Thus, said signal generator and said detector share the same input/output line, thereby reducing the number of control or transmission lines required to operate the quantum system, and further extending the lifetime of the first resonant physical oscillatory mode (that which may host a cat qubit) by reducing the amount of coupling of the first resonant physical oscillatory mode to the external environment.

Physically preparing, with the one or more signal generator(s), the quantum system in the first dynamical configuration may comprise physically preparing a cat qubit hosted in the first resonant physical oscillatory mode; wherein step (iii) comprises calculating only one or more non-null correlation function(s) from the first dynamical configuration which are even-order correlation functions; and wherein, step (vii), numerically fitting the first simulation of the one or more first correlation function(s) comprises numerically simulating only one or more even-order correlation function(s).

That is, the present Inventors have recognised that a symmetry exists in a cat-qubit system such that only even-order correlation functions are non-null, such that the present characterization method can be made more efficient by only numerically simulating even-order correlation functions.

Physically preparing different ones of the dynamical configurations may comprise inputting, with the one or more signal generator(s), respectively different control signals to the quantum system, wherein the different control signals are configured to drive the first resonant physical oscillatory mode and/or second resonant physical oscillatory mode.

The present Inventors have discovered that changing dynamical configurations by inputting different drives on the first "memory" physical oscillatory mode, the second "buffer" physical oscillatory mode, or both, is particularly convenient, as signal generator configured to drive these modes are already required for stabilizing and manipulating a cat-qubit (e.g. via a so-called Zeno drive to perform a $Z$-gate requires inputting a drive on the first "memory" physical oscillatory mode). Thus, the present invention enables full characterization of the cat-qubit system in a single characterization process, using only input/output lines already required for eventually manipulating the cat qubit.

Of course, any number of different dynamical configurations may be prepared, for instance different dynamical configurations may comprise stabilizing a cat-qubit having different "sizes", namely average boson (e.g. photon) number hosted in the first "memory" physical oscillatory mode.

The non-linear element may be an asymmetrically threaded SQUID (ATS) comprised of a first superconducting loop and a second superconducting loop, wherein a signal generator of the one or more signal generator(s) is coupled to the ATS and configured to thread the first and second superconducting loops together with a common magnetic flux $\varphi_\Sigma$ and a differential magnetic flux $\varphi_\Delta$; and wherein physically preparing different ones of the dynamical configurations comprises inputting, with said signal generator, respectively different pairs of common $\varphi_\Sigma$ and differential $\varphi_\Delta$ magnetic fluxes ($\varphi_\Sigma$, $\varphi_\Delta$),

and wherein at least one of the pairs is not at a saddle point $(\varphi_\Sigma, \varphi_\Delta) \neq \left(\pm\frac{\pi}{2}, \pm\frac{\pi}{2}\right)$.

The quantum system may comprise a plurality of qubit-hosting structures, wherein each of the qubit-hosting structures is respectively coupled to at least one other of the qubit-hosting structures by a multi-qubit linear coupling element or by a multi-qubit non-linear coupling element; wherein the method may comprise: in at least one of physically prepared dynamical configurations, physically performing, with the one or more signal generator(s), a multi-qubit gate operation between a qubit hosted in one of the qubit-hosting structures and at least one other qubit hosted in at least one other of the qubit-hosting structures; wherein at least one physical parameter of the shared subset of physical parameters is a physical parameter which characterizes the multi-qubit gate operation.

For instance, in embodiments wherein a given one of the qubit-hosting structures is a cat qubit-hosting structure configured to host a cat qubit, the at least one resonant portion of the cat qubit-hosting structure may be coupled to the at least one resonant portion of another qubit-hosting structure by a multi-qubit linear coupling element such as a capacitive coupler or an inductive coupler.

The multi-qubit gate operation may be a CNOT gate, and a physical parameter which characterizes the multi-qubit gate operation may be selected from the group comprising: an amplitude or phase of a CNOT pump drive $\varepsilon_{CX}$ at the control qubit frequency; an amplitude or phase of a coupling strength $g_{CX}$; an amplitude or phase of a linearly compensating counter drive; a CNOT gate operation time $\tau_{CX}$; and a coupling strength of the multi-qubit linear or non-linear coupling element.

According to some embodiments, at least one, and optionally each, of the one or more qubit hosting structure(s) comprises a plurality of detectors, each of the detectors being respectively coupled to one of the at least one resonant portion or to the non-linear element so as to measure signals output from the first and/or second physical oscillatory modes to provide measurement signals from the quantum system. Calculating a given set of one or more correlation function(s) may comprise calculating from a plurality of measured continuous signals physically measured with different ones of the plurality of detectors.

In a second aspect, there is also provided a quantum characterization unit comprising a quantum system and a command circuit coupled to the quantum system.

The quantum system comprises one or more qubit-hosting structure(s), each of the one or more qubit-hosting structure(s) comprising: (I) at least one portion configured to have at least one physical oscillatory mode, (II) one or more signal generator(s) coupled to the at least one portion and configured to input control signals to physically prepare the quantum system in a dynamical configuration, and (III) a detector coupled to the at least one resonant portion and configured to measure continuous signals output from the at least one oscillatory mode to provide measurement signals from the quantum system.

The command circuit is configured to: (i) physically prepare, with the one or more signal generator(s), the quantum system in a first dynamical configuration, wherein the first dynamical configuration is describable via a first stochastic master equation having a first plurality of physical parameters; (ii) physically measure, with the detector, a continuous signal from the quantum system in the first dynamical configuration to provide a first measured continuous signal; (iii) repeat steps (i) and (ii) a plurality of times to provide a plurality of first measured continuous signals, and calculate one or more first correlation function(s) from the plurality of first measured continuous signals; (iv) physically prepare, with the one or more signal generator(s), the quantum system in a second dynamical configuration which is different to the first physical configuration, wherein the second dynamical configuration is describable via a second stochastic master equation having a second plurality of physical parameters, and wherein the quantum system is physically prepared in the second dynamical configuration such that a subset of the second plurality of physical parameters is a shared subset with a subset of the first plurality of physical parameters; (v) physically measure, with the detector, a continuous signal from the quantum system in the second dynamical configuration to provide a second measured continuous signal; (vi) repeat steps (iv) and (v) a plurality of times to provide a plurality of second measured continuous signals, and calculating one or more second correlation function(s) from the plurality of second measured continuous signals; (vii) assign values to the shared subset of physical parameters which characterizes the quantum system by jointly numerically fitting: (a) a first simulation of the one or more first correlation function(s), numerically simulated from the first stochastic master equation, to the calculated one or more first correlation function(s), and (b) a second simulation of the one or more second correlation function(s), numerically simulated from the second stochastic master equation, to the one or more second correlation function(s).

The second aspect may comprise any of the features and embodiments described above in relation to the first aspect.

BRIEF DESCRIPTION OF THE DRAWINGS

Various embodiments of the invention will now be described, by way of example only, and with reference to the accompanying drawings in which:

Figure 1 shows a diagram of a generic quantum system to be characterized according to an embodiment of the invention;
Figure 2 shows components of a quantum system for stabilizing a cat qubit by implementing a parametric dissipative stabilization with an ATS, according to an embodiment of the invention; Figure 3A shows components of a quantum system for stabilizing a cat qubit arranged to perform a resonant dissipative stabilization of a cat qubit, according to an embodiment of the invention;
Figure 3B shows an exemplary three-wave mixing nonlinear element which may be used in the embodiment of Figure 3A;
Figure 4 shows components of a quantum system on which a CNOT gate may be implemented, according to an embodiment of the invention;
Figure 5 shows two longitudinal coupling establishment schemes for a CNOT gate, according to an embodiment of the invention;
Figure 6 shows a flow diagram of method steps for characterizing a quantum system, according to an embodiment of the invention;
Figure 7 shows how the filtering and digitisation of a sharp diffusive signal is modelled, according to an embodiment of the invention;
Figure 8 shows how a three-point correlation function is calculated from physical measurements of filtered or binned signal, according to an embodiment of the invention;
Figure 9 shows a method for extracting physical parameters by fitting correlation functions, according to an embodiment of the invention;
Figures 10A-10E shows the systems of coupled ODEs to solve, in matrix form, to compute correlation functions up to order three for a single signal for jump or diffusive SME, according to an embodiment of the invention;
Figure 11 shows two-point correlation functions for three different combinations of parameters for an exemplary quantum system in a dynamical configuration, according to an embodiment;
Figure 12 shows two-point correlation functions for an exemplary quantum system in two different dynamical configurations, according to an embodiment;
Figure 13A shows one-point correlation functions of X- and P-quadrature binned signals for an exemplary quantum system in three different dynamical configurations, according to an embodiment;
Figure 13B shows a table which summarises the fitted parameters resulting from

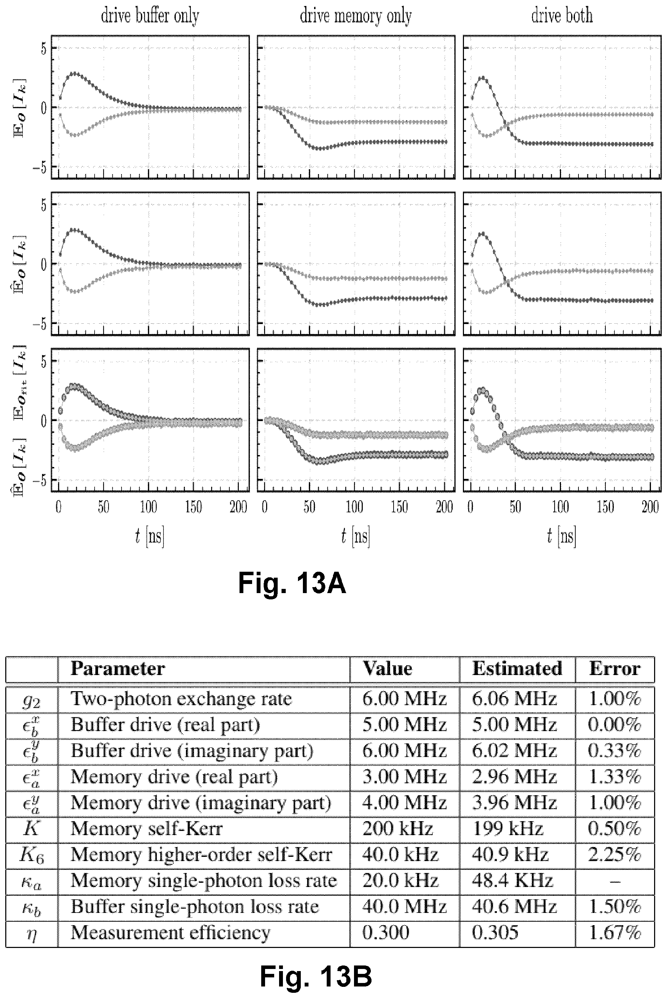

Figure 13A which characterizes the exemplary quantum system, according to an embodiment; and

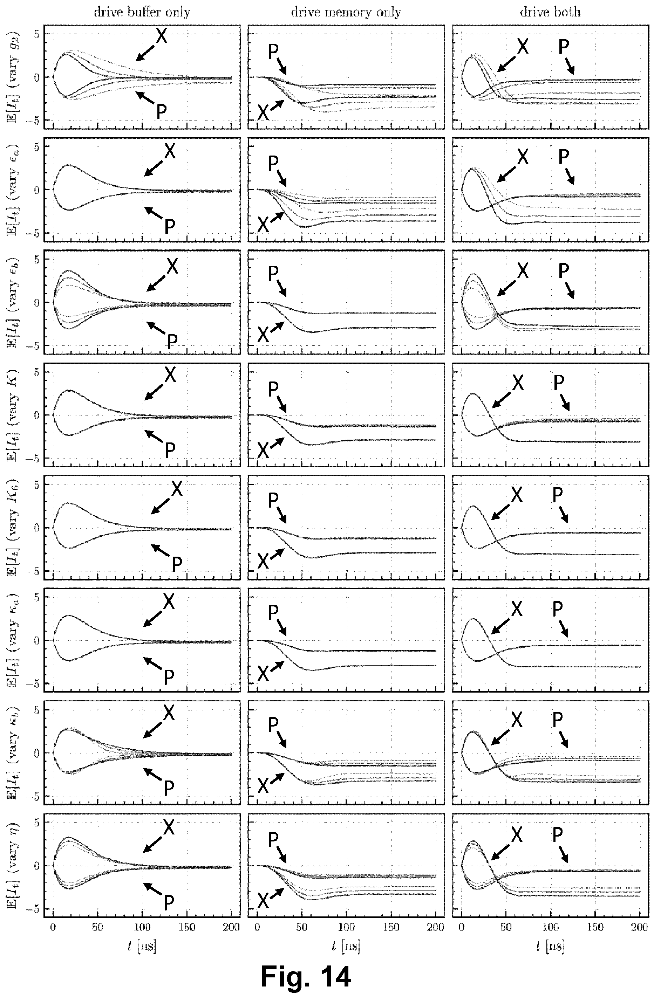

Figure 14 shows how the one-point correlation of the modelled sharp signal in the example of Figure 13A varies with each parameter.

DETAILED DESCRIPTION

**Quantum system to be characterized**

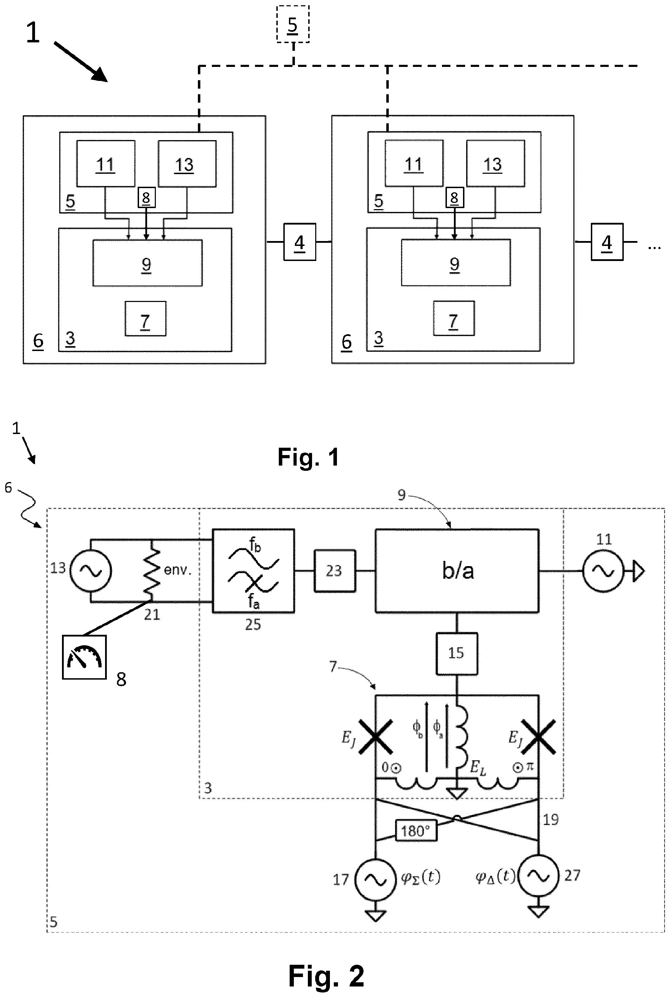

Figure 1 shows an exemplary quantum system 1 which is arranged to stabilize or host one or more qubits. The quantum system 1 comprises one or more qubit-hosting structures 6, each of which is configured to host or stabilize a qubit therein. Figure 1 shows two qubit-hosting structures 6 as an example, which are coupled to each other via a linear or non-linear coupler 4. As will be appreciated, there could instead be a single qubit-hosting structure 6 or there could be more than two.

Each qubit-hosting structure 6 has at least one resonant portion 9 which is configured to host at least one physical oscillatory mode. In embodiments this could be a first physical oscillatory mode a and a second physical oscillatory mode b. As will be understood, the oscillatory mode(s) could be any physical dynamical oscillation suitable for hosting a qubit, such as electromagnetic, magnonic (spin), phononic (acoustic), plasmonic etc. The at least one resonant portion is a physical structure configured to enable the physical oscillatory mode(s) to live and oscillate therein, such as a superconducting resonator in which electromagnetic wave(s) oscillate, a variety of electrodes and lasers configured to trap ions in potential wells defined thereby.

Coupled to the at least one resonant portion 9 there may be a non-linear element 7, which for instance couples to the physical oscillatory mode. The at least one resonant portion 9 and the non-linear element 7 coupled thereto together thus provide a non-linear quantum circuit 3.

Each qubit-hosting structure 6 also has one or more signal generator(s) 11,13 coupled to the at least one resonant portion 9. In Figure 1, two signal generators are shown both coupled to the at least one resonant portion 9, however there could be only a single signal generator, or more than two. Additionally or alternatively, one or more signal generator(s) could be coupled to the non-linear element 7. Regardless of which part of the non-linear circuit 3 they are coupled to, the one or more signal generator(s) 11, 13 are configured to physically prepare the quantum system 1 in a dynamical configuration by inputting control signals to the at least one resonant portion 9 and/or the non-linear element 7.

Preparing the quantum system 1 in a dynamical configuration could be by preparing a qubit of a particular state in at least one of the one or more qubit-hosting structures 6. Similarly, this could be preparing some coherent state hosted in one of the at least one physical oscillatory mode. What is important is that the one or more signal generator(s) 11, 13 enable inputs to the quantum system 1 such that quantum system 1 is a dynamical system. That is, in general, a new dynamical configuration is achieved by either changing the initial state of the quantum system 1 and/or changing the control signals input thereto.

Moreover, as will be appreciated, the specific form of the control signals will depend on the specific architecture of quantum system 1. For instance, as discussed more below, if the quantum system 1 is based on superconducting circuits, the control signals may be electromagnetic pulses and drives (in particular microwave radiation), or current biases, or DC voltage biases etc.

Figure 1 also shows a detector 8 coupled to the at least one resonator portion 9 in each of the qubit-hosting structures. The detector 9 could instead be coupled to the non-linear element 7. What is important, is that the detector 9 is configured to measure continuous signals output from the at least one oscillatory mode hosted by the at least one resonant portion 9 to provide measurement signals from the quantum system 1. The detector 9 may be of any suitable type, for instance the detector could have a discrete-valued output (e.g. a binary output zero or 1), or the detector 9 could have a continuous -valued output.

Figure 1 further shows that each qubit-hosting structure 6 comprises a command circuit 5, which includes a classical processor (i.e. conventional computer) configured to control the signal generator(s) 11,13 and receive the output from the detector 8. Of course, a single command circuit 5 may globally control all of the elements of the various structures of quantum system 1, such as all of the qubit-hosting structures 6 and the non-linear couplers 4 where appropriate, as indicated via the dashed lines in Figure 1.

The command circuit 5 is therefore not "quantum", but rather controls the elements such as the signal generator(s) and the detector which themselves may be coupled to or have some influence on the qubit states hosted in the one or more qubit-hosting structures 6. In this sense then, the command circuit 5 and the quantum system 1 may together be considered quantum characterization unit. The quantum characterization unit may itself be part of a quantum processor, a quantum communication system, or a quantum detection system, as the case may be according to the specific technical use the qubits are put to.

The method of the present invention may be applied to a host of different quantum systems, provided a time-continuous signal output from the system is observable by a detector.

For instance, the quantum system could be a driven anharmonic oscillator under heterodyne detection. Such a quantum system could for instance be realised by...

Another example could be a driven two-level system (i.e. a qubit) whose loss channel is monitored by a photodetector. Such a quantum system could be realised by...

The present Inventors have discovered that the present invention is particularly suited to characterising so-called cat-qubits, which typically face difficulties in swiftly and accurately extracting physical parameters which characterize the quantum system. A two-legged cat qubit is defined as a two-dimensional manifold spanned by the so-called cat states $\left|C_\alpha^\pm\right\rangle$ which are superpositions of two coherent states $|\alpha\rangle$ and $|-\alpha\rangle$: $\left|C_\alpha^\pm\right\rangle = N^\pm(|\alpha\rangle \pm |-\alpha\rangle)$, where

$$N^\pm = 1/\sqrt{2(1 \pm e^{-2|\alpha|^2})} \; .$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flips is only at the cost of linear increase of phase-flips.

The cat qubits can be stabilized or confined by the following exemplary schemes:

(A) A parametric dissipative stabilization, with jump operator $L_2 = \sqrt{\kappa_2}(a^2 - \alpha^2)$, where $\kappa_2$ is the two-photon dissipation rate, *a* is the photon annihilation operator of the memory mode a and $\alpha$ is a complex number defining the cat qubit. This jump operator can be realized by coupling a lossy buffer mode b with dissipation rate $\kappa_b$, and a four-wave mixing non-linear element - typically a Josephson junction or an asymmetrically threaded SQUID (ATS) - to the memory mode a and by engineering the Hamiltonian $H/\hbar = g_2(a^2 - \alpha^2)b^\dagger + \text{h. c.}$, where b is the photon annihilation operator of the buffer mode b and $g_2$ is the two-photon coupling rate, by applying to the four-wave mixing non-linear element a pump at frequency $|2f_a - f_b|$ and a drive of the buffer mode b at frequency $f_b$ provided $g_2 < \kappa_b$.

(B) A Kerr Hamiltonian $H/\hbar = \frac{K}{2}\left(a^{\dagger 2} - \alpha^2\right)\left(a^2 - \overline{\alpha^2}\right)$, where *K* is the amplitude of the Kerr Hamiltonian, *a* is the photon annihilation operator, and $|\alpha|^2$ is the mean photon number.

(C) A detuned Kerr Hamiltonian $H/\hbar = \frac{K}{2}\left(a^{\dagger 2} - \alpha^2\right)\left(a^2 - \overline{\alpha^2}\right) - \Delta a^\dagger a$, where *K* is the amplitude of the Kerr Hamiltonian, *a* is the photon annihilation operator, $\alpha$ is a complex number defining the cat qubit, and $\Delta$ is the detuning factor.

(D) A two-photon exchange (TPE) Hamiltonian $H/\hbar = g_2(a^2 - \alpha^2)\sigma_+ + \text{h. c.}$, where $g_2$ is the complex two-photon coupling rate, *a* is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization (A).

(E) A dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, a is the photon annihilation operator of the memory mode a, $\alpha$ is a complex number defining the cat qubit, *r* and $\theta$ are the modulus and argument of the complex squeezing parameter $\xi = re^{i\theta}$. This jump operator can be realized by coupling a lossy buffer mode b with dissipation rate $\kappa_b$, and a four-wave mixing non-linear element - typically a Josephson junction or an ATS -, to the memory mode a and by engineering the Hamiltonian $H/\hbar = g_{SC}\left(\left(\cosh(r)a + \sinh(r)e^{i\theta}a^\dagger\right)^2 - \alpha^2\right)b^\dagger + \text{h. c.}$, where *b* is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

(F) A variant of the previous stabilization scheme e), for which the Applicant filed the European patent application EP 23175147.0, in which a bosonic qubit-called "*moon cat qubit*" since the two blobs of the Wigner function have a crescent moon shape - is stabilized by engineering the Hamiltonian $H/\hbar = g_2\left(a^2 + \lambda a^\dagger a - \alpha^2\right)b^\dagger + \text{h. c.}$, where $g_2$ is the amplitude of the two-photon coupling rate as described above achieved via a pump at frequency $|2f_a - f_b|$ a is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

(G) A DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency $|2f_a - f_b|$ necessary to achieve dissipative stabilization. In particular, the two-photon coupling rate $g_2$ is therefore not limited by the amplitude of the two-photon pump: $g_2 = \frac{E_J}{4}\varphi_a^2\varphi_b$, where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

(H) A resonant dissipative stabilization, for which the Applicant filed the European patent application EP 21306965.1, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a three-wave mixing non-linear element to the memory mode a which engineers the Hamiltonian $\% = g_2(a^2-\alpha^2)b^\dagger + h.\,c.$, where $b$ is the photon annihilation operator of the buffer mode b provided the mode frequencies verify substantially $2f_a = f_b$ and $g_2 < \kappa_b$ to which a drive of the buffer mode at frequency $f_b$ is added.

In the context of Figure 1, in embodiments wherein the quantum system 1 is for hosting a cat qubit via dissipative stabilization, the quantum circuit 3 may be a circuit fabricated out of superconducting material comprising of various resonators, transmission lines, capacitors, inductors, and Josephson junctions, and may be arranged to make possible three- or four-wave mixing between a first physical oscillatory mode a and a second physical oscillatory mode b.

In the following, the first physical oscillatory mode a is used as a memory hosting a cat qubit, while the second physical oscillatory mode b is used as a buffer in between the cat qubit and the external environment. Hereafter, the identifier "physical oscillatory" will be dropped when referring to modes.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 3 is intended to be subject to electromagnetic radiation delivered by the command circuit 5 in order to engineer various non-linear interactions between the first mode a and the second mode b. The frequency of each electromagnetic radiation is tuned to select specific terms within the rotating wave approximation. Typically, for superconducting materials such as aluminium, the electromagnetic radiation used herein may be in the microwave regime.

The non-linear superconducting quantum circuit 3 comprises a non-linear element 7 and at least one resonant portion 9. The non-linear element 7 may be a four-wave mixing non-linear element, such as an ATS or Josephson junction suitable for parametric dissipative stabilization schemes such as scheme (A) above, or one or more Josephson junctions suitable for a DC dissipative stabilization scheme corresponding to scheme (G) above. The non-linear element 7 can also be a three-wave mixing non-linear element, for example a superconducting non-linear asymmetric inductive element (SNAIL) or other three-wave mixing non-linear elements in the case of a resonant dissipative stabilization which corresponds to stabilization scheme (H) above.

The resonant portion 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the non-linear element 7, noted $\varphi_a$ for the first mode a and $\varphi_b$ for the second mode b.

In the schematic diagram of the quantum system 1 illustrated in Figure 1, the non-linear superconducting quantum system 3 comprises only one resonant portion, i.e. the resonant portion 9. This may be achieved via design of the resonator (e.g. various capacitances and inductances as defined for instance by the resonator geometry) such that it hosts modes of different frequencies. The design may also result in the modes having different engineered quality factors.

However, in general it should be understood here that the non-linear superconducting quantum system 3 comprises at least one resonant portion, and typically two or more resonant portions to form the two electromagnetic modes, which act as a cat qubit "memory" mode and a buffer mode.

The first resonator potion may be provided by a 3D resonator, such as a cavity machined out of high purity aluminium (e.g. above 99.99% purity). Similarly, the second resonator portion may provided as an antenna-like cavity.

Alternatively, the first and second resonator potions may be provided by a 2D resonator, such as a co-planar waveguide design. Some resonator portions may be 3D, some may be 2D. In either case, such superconducting resonators are considered electromagnetic resonators and the modes hosted therein are electromagnetic modes.

Although electromagnetic resonators are convenient for design and control purposes, the resonator portions need not necessarily be electromagnetic resonators. In particular, for the first resonator portion which hosts the cat qubit, it could be a nanomechanical resonator, such as phononic-crystal-defect resonators (PCDRs), similar to those described in P. Arrangoiz-Arriola, E. A. Wollack, Z. Wang, M. Pechal, W. Jiang, T. P. McKenna, J. D. Witmer, R. Van Laer, and A. H. Safavi-Naeini's work, "Resolving the energy levels of a nanomechanical oscillator," published in Nature 571, 537 (2019). These PCDRs are periodically patterned suspended nanostructures that support localized acoustic resonances in the gigahertz range. They are made from a piezoelectric material like LiNbO3, enabling the coupling of these resonances to superconducting circuits with nearly the same efficiency as standard electromagnetic cavities. Specifically, quasi-one-dimensional PCDRs made from lithium niobate, a piezoelectric crystalline material, could be used, with modes localized within a volume less than 1 $\mu$m3 of a suspended nanostructure.

In such acoustic resonators, the cat qubit is encoded in the phonons of the resonator.

Other types of acoustic resonators, such as acoustic membranes, also exist. The primary requirement is an acoustic-to-electromagnetic coupler, to couple the acoustic first resonator portion to the non-linear element 7.

Furthermore, other types of resonators may be used, such as a magnetic resonator wherein the quanta of oscillations are magnons (collective spin excitations). An example could be a designed yttrium-ion-garnet (YIG) particle, as described in Kounalakis, Marios, Gerrit EW Bauer, and Yaroslav M. Blanter. "Analog quantum control of magnonic cat states on a chip by a superconducting qubit." Physical review letters 129.3 (2022): 037205. Again, there is a requirement to couple magnetic first resonator portion to the non-linear element 7. Yet another type of resonator suitable for hosting cat qubits could be semiconductor double quantum dots embedded in a cavity such as a split-ring resonator cavity as disclosed in Kozin, Valerii K., et al. "Quantum phase transitions and cat states in cavity-coupled quantum dots." Physical review research 6.3 (2024): 033188.

Thus, herein a cat qubit may be encoded in the bosons of the resonator. Herein, for the sake of simplification, the 2-to-1 boson exchange is a 2-to-1 photon exchange, however it will be appreciated that all reference to photons and photon exchange regarding the first mode which hosts the cat qubit can be replaced with bosons or boson exchange (e.g. acoustic phonons, or magnons, or indeed plasmons).

The command circuit 5 is arranged to deliver control signals, such as electromagnetic radiation of DC voltage biases. To this end, as illustrated in figure 1, the command circuit 5 comprises signal generators in the form of at least a first mode drive 11 and a second mode drive 13. For instance, the command circuit 5 may be arranged at least to drive the second mode b by delivering radiation at a frequency substantially equal to the second resonant frequency $f_b$ to the resonant portion 9.

By "a frequency substantially equal to", it should be understood that, ideally, the frequency is exactly equal to the desired value. However, in practice, the frequency value deviates from the desired value, typically by 1 or even 5%, due to the inherent precision of the hardware used.

Moreover, as will be understood, the frequency of a mode may be shifted in use. For instance, under certain dynamical interactions such as application of an electromagnetic pump to the resonant portion 9, the frequencies of the first mode a and the second mode b may be effectively shifted (e.g. Stark shifted) due to the presence of a static potential or dynamical interaction. However, the skilled person would be well aware of characterising such effective frequencies, and for simplicity herein, by the first mode a and the second mode b "having" respective resonant frequencies $f_a$ and $f_b$, it will be understood as static meaning "un-dressed" frequencies or shifted "dressed" frequencies when in the presence of a dynamical interaction, depending on the situation.

Figure 2 illustrates an embodiment in which a single qubit-hosting structure 6 is arranged to perform the parametric dissipative stabilization to stabilize a cat qubit (i.e. a cat-qubit-hosting structure 6), wherein the non-linear element 7 is an ATS. An ATS is an inductive dipole element formed by a pair of Josephson junctions (indicated by the crosses and $E_J$ label in Figure 2) being shunted by an inductance (indicated by the $E_L$ label in Figure 2). The inductance may be formed for instance from a linear array of Josephon junctions. The Josephson junctions are each arranged on a different superconducting path such that they each form a distinct loop with the inductance, such that the ATS can be viewed as two superconducting loops connected by the shared edge which comprises the inductance. The ATS is thus sensitive to the magnetic flux threaded through each of the two loops.

The at least one resonant portion 9 is coupled via a linear coupler 15 to the ATS 7 which acts as an inductive element, such that the first mode a and the second mode b participate in the ATS 7. Example of embodiments for the linear networks which form the at least one resonant portion are known. For instance, among these embodiments, the non-linear superconducting quantum circuit 3 can be a two-mode hybridized system (also known as "galvanic cat", for which the Applicant has filed patent application EP22306815.6 and EP22306816.4) for which two lumped modes couple strongly via the ATS.

It is known to the skilled person that an ATS can be used to engineer in general a 2-to-1 boson conversion, i.e. the

first term $a^2$ of the jump operator $L_2^{\alpha}$, in order to perform a parametric dissipative stabilization More particularly, a 2-to-1 photon conversion between the first mode a and the second mode b is obtained by parametrically pumping the ATS at the frequency $f_p = |2f_a - f_b|$, as successfully shown by Lescanne, Raphaël, et al. "Exponential suppression of bit-flips in a qubit encoded in an oscillator." Nature Physics 16.5 (2020): 509-513. Advantageously, the pump frequency satisfies $f_p \gg g_2$ to make this parametric pumping work as well as possible.

It is known to the skilled person that, in the case of the non-linear element 7 being an ATS 7, when biased at its flux working point also known as the "saddle point" (0 - $\pi$, namely 0 flux threaded through one of the loops and $\pi$ flux in unit of the flux quantum threaded through the other of the loops), the Hamiltonian of the ATS 7 has the following "sin-sin" form:

$$H_{ATS} = -2E_J \sin\big(\varphi_\Sigma(t)\big) \sin(\varphi) + \frac{E_L}{2}\big(\varphi - \varphi_\Delta(t)\big)^2,$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering electromagnetic radiations through flux lines of the ATS 7 out of phase, the latter can be implemented by delivering electromagnetic radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos (2\pi f_p t)$, the non-linear resonant part of the Hamiltonian writes in the rotating frame:

$H_{ATS} = (E_J \epsilon_{2ph} \varphi_a^2 \varphi_b / 2) * (a^2 b^\dagger + \text{h. c.})$, which is typically the two-to-one photon exchange Hamiltonian needed to engineer the two-photon stabilization.

When an external DC magnetic field is set such that a 0 mod $2\pi$ magnetic flux threads one of the loop and a $\pi$ mod $2\pi$ flux threads the other loop, it is ensured that the ATS Hamiltonian has its "sin-sin" form. For clarity, the set-up applying the external DC magnetic field is not drawn on Figure 1 but can be applied via the two bottom mutual inductances of the ATS 7. A typical implementation consists in interleaving a bias-tee connected to a DC current source to input DC current into the system while letting the electromagnetic radiations go through. As will be described below, the components which generate the required magnetic fields are current-carrying flux bias lines close to the ATS 7.

The cat-qubit-hosting structure 6 comprises a further signal generator in the form of an electromagnetic source 17 which is set-up to modulate the common flux in the ATS 7. For this purpose, a electromagnetic network 19 is used to split the radiation emitted by the electromagnetic source 17 and apply it to each node of the ATS 7 with the correct phase. Alternatively, two different electromagnetic sources could be used, each being simply coupled to a single node of the ATS 7 and their relative phase and amplitude being set so as to achieve the desired flux modulation.

When the electromagnetic source 17 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 21 via a linear coupler 23 and a electromagnetic filter 25 configured as a band pass filter with a frequency $f_b$.

Alternatively, the electromagnetic filter 25 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 21.

Alternatively, it may be configured as a low-pass (respectively high-pass) filter if $f_a > f_b$ (resp $f_b > f_a$). In other embodiments, the electromagnetic filter 25 can be omitted when coupling between the load 21 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a electromagnetic source 13 set at frequency $f_b$.

In the above, the load 21 can be seen as part of the command circuit 5 of figure 2, while the linear coupler 23 and the electromagnetic filter 25 can be seen as part of the non-linear superconducting quantum circuit 3.

The command circuit 5 of cat-qubit-hosting structure 6 may further comprise signal-generators in the form of a electromagnetic source 11 and a electromagnetic source 27. In addition to stabilizing the cat qubit, the command circuit 5 also enables measurement an observable of the cat qubit or application of a quantum gate to the cat qubit.

The electromagnetic source 11 may be arranged to drive the first mode a by delivering electromagnetic radiation at the frequency $f_a$ to the linear electromagnetic network b/a. Such a drive of the first mode a causes the non-linear superconducting quantum circuit 3 to engineer a Hamiltonian Hz expressed as $H_z/\hbar = \epsilon_z a + \mathrm{h.c.}$, where the complex rate $\epsilon_z$ results from the amplitude and phase of the drive of the first mode a.

An additional signal generator in the form of another electromagnetic source may be set-up, in addition to the electromagnetic source 17, to contribute to the modulation of the common flux in the ATS 7. The additional electromagnetic source may be arranged to deliver electromagnetic radiation for causing the non-linear superconducting quantum circuit 3 to engineer a Hamiltonian. For instance, such a Hamiltonian may yield a so-called longitudinal coupling term between the first mode a and the second mode b, which may be used to apply a Z gate.

The electromagnetic source 27 is set-up to modulate the differential flux in the ATS 7 through the electromagnetic network 19. The electromagnetic source 27 can be used to reduce spurious Hamiltonian terms induced by the additional electromagnetic source. It is to be noted that the electromagnetic network 19 is used for convenience but can be omitted and the electromagnetic source 27 and any additional electromagnetic source could be applied directly to both nodes of the ATS 7, their relative phase and amplitude being set so as to achieve the desired flux modulation.

For the sake of completeness, it may also be noted that the electromagnetic source 27 can be used, instead of the electromagnetic source 13, to deliver electromagnetic radiation at a frequency $f_b$ to the linear electromagnetic network b/a to drive the second mode b.

Typically, the circuit has flux lines through which radiation can be delivered to provide (and optionally modulate) the common flux (herein also referred to as $\varphi_\Sigma$ or "sigma flux") and provide (and optionally modulate) the differential flux (herein also referred to as $\varphi_\Delta$ or "delta flux"). These are generally referred to as the two bias modes. As such, the flux lines may deliver both a DC-bias (setting the working point described above by applying DC current to thread the ATS loops with the relevant magnetic fluxes) and an RF-bias (superposed modulation to permit the time-dependent magnetic flux terms to "pump" the ATS as discussed above).

Finally, detector 8 is shown as being connected to the electromagnetic source 13 which delivers electromagnetic radiation at a frequency $f_b$ to the linear electromagnetic network b/a. Thus, as will be appreciated, a single line (e.g. transmission line) may be used to both input electromagnetic radiation and output a continuous signal. In this case, the continuous signal is output from the second mode b. In particular, the detector 8 may be configured for heterodryne detection of the fluorescence from the second mode b. As will be appreciated, other implementations of the detector is possible, for instance it could primarily be coupled for detection of the first mode a.

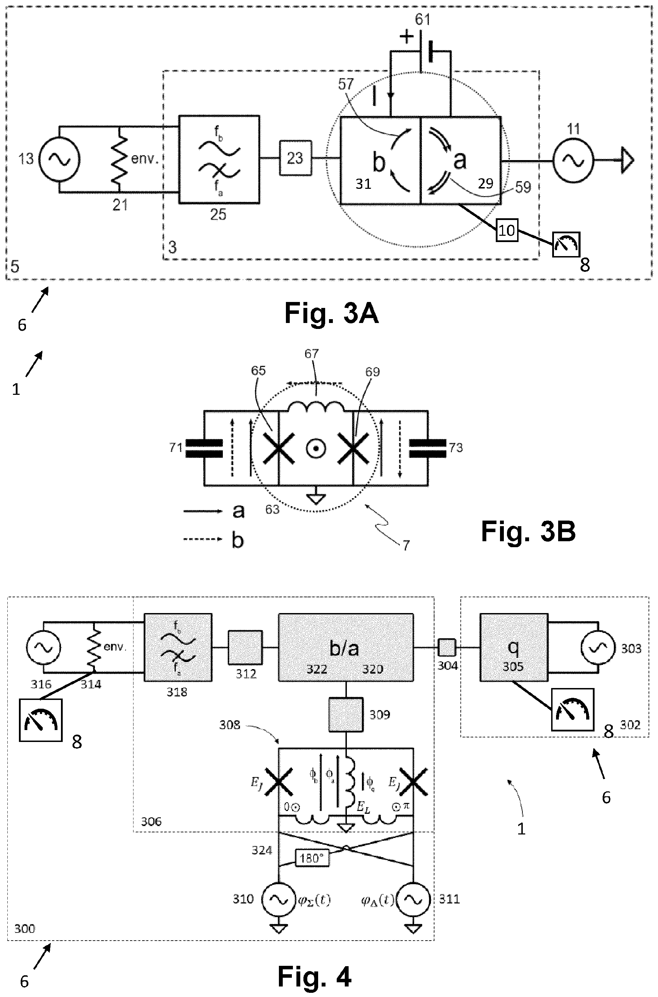

Figure 3A illustrates an embodiment in which the quantum system 1 is arranged to perform resonant dissipative stabilization to stabilize a cat qubit, i.e. wherein the non-linear element 7 is a three-wave mixing non-linear element 7. Thus, in comparison with Figure 1, the non-linear element 7 and the at least one resonant portion 9 are brought together to form part of the non-linear superconducting quantum circuit 3, which explains why the reference signs "7" and "9" are absent from Figure 3A. Here, the non-linear superconducting quantum circuit 3 is arranged to perform intrinsically the 2-to-1 photon exchange - symbolized here by a back-and-forth single arrow 57 and double arrows 59 - between the first mode a and the second mode b (denoted by reference numerals 29 and 31 to indicate hosting of the two modes).

Like reference numerals indicate features which are the same as described above in Figure 2. For instance, the electromagnetic radiation sources 11 and 13 are configured in the same manner as in Figure 2 to respectively drive the first mode a and the second mode b.

The command circuit 5 further comprises a current source 61 or applying a current to the non-linear element 7 and the at least one resonant portion 9. The current source 61 may be connected by wires (i.e. galvanically) to the non-linear element 7 and the at least one resonant portion 9, or may be a flux line for flux biasing a loop (e.g. of the non-linear element 7 as in Figure 3B) to thereby induce a current flowing around the loop due to the magnetic flux therethrough. The current source 61 is arranged to deliver current which flows through one or more components of the non-linear superconducting quantum circuit 3. The current source 61 is configured to both allow three-wave mixing interaction and to tune the frequency matching condition $2f_a = f_b$, in particular by inducing a particular current flow across the three-wave mixing non-linear element 7 which enables tuning of the resonant frequencies of first mode a and the second mode b as they participate in the non-linear element 7.

Detector 8 in Figure 3A is shown as being coupled to the part 29 of the at least one resonant portion which predominantly hosts the first mode a. Specifically, a tomography transmon 10 may be coupled (e.g. capacitively coupled) to the part 29 of the at least one resonant portion, to which the detector 8 is coupled to read the state of the tomography transmon (e.g. reading a continuous signal through an associated intermediate readout resonator and Purcell filter). Of course, other implementations of the detector 8 again is possible, for instance it could primarily be coupled via the same line which inputs from the electromagnetic source 13 in a similar manner as in Fig. 2.

Figure 3B shows a possible circuit to realize the three-wave mixing non-linear element 7, which in this embodiment is formed by at least one loop 63 including a first Josephson junction 65, a central inductive element 67 and a second Josephson junction 69. Alternative embodiments of the three-wave mixing non-linear element 7 are described in EP21306965.1 filed by the Applicant.

Returning to Figures 3A and 3B, when a predetermined current of a constant intensity is applied by the current source 61, the resonant frequency $f_b$ is substantially equal to twice the resonant frequency $f_a$. Said otherwise, what is important is that the superconducting circuit 3 has these structural features so linked, and that (regardless of the specific shape of the components) the resonance matching condition is satisfied when the constant current is applied. This current can be determined by the skilled person any number of known ways. In particular, what is important is that the non-linear element comprises at least one loop 63 including at least one Josephson junction therein, and that the resonant modes a and b at least partially participate in the loop.

The circuit shown in Figure 3B is particularly configured to discriminate symmetrically the memory mode a and the buffer mode b. The high symmetry of such a circuit achieves an improved quality of the 2-to-1 photon exchange, as well as to make the function of filter 25 integral to the flux line used to flux bias the loop 63 (which is also the second mode electromagnetic source 13). The relative position with respect to the loop 63, and the geometry, of the flux line which acts as the second mode electromagnetic source 13 enables coupling to the second mode whilst inherently filtering the first mode to prevent or substantially minimize coupling of the first mode a to the load (environment) 21.

The central inductive element 67 can be an inductance, a single Josephson junction or an array of Josephson junctions. The central inductive element 67 may thus be arranged between the first Josephson junction 65 and the second Josephson junction 69 as a loop in series. The arrangement in series may comprise a first inner node connecting a pole of the first Josephson junction 65 with a pole of the central inductive element 67. The arrangement in series may also comprise a second inner node connecting a pole of the second Josephson junction 69 with another pole of the central inductive element 67. The arrangement in series may also comprise a closed-loop node connecting another pole of the first Josephson junction 65 with another pole of the second Josephson junction 69.

The at least one loop 63 may be connected to a common ground via the closed-loop node. The circuit may also comprise a first capacitive element 71 and a second capacitive element 73. The first capacitive element 71 may be connected in parallel with the first Josephson junction 65 between the common ground and the first inner node of the loop. The second capacitive element 73 may be connected in parallel with the second Josephson junction 69 between the common ground and the second inner node of the loop.

The first Josephson junction 65 and the second Josephson junction 69 are substantially identical and the capacitive elements 71 and 73 are also substantially identical. Hence, the symmetry of the circuit implies that the memory mode a is the symmetric superposition of the two resonators (as shown by the full arrows) and the buffer mode b is the anti-symmetric superposition of the two resonators (as shown by the dashed arrows). It can be noticed that only the buffer mode b has a contribution across the central inductive element 67 which is advantageously used to preferentially couple the external environment to this buffer mode b while isolating the memory mode a from the external environment via the design of the electromagnetic source 13 as described above.

Figure 4 shows a physical system on which a CNOT gate may be implemented. Here, the quantum system 1 comprises a target cat-qubit-hosting structure 300 (which is similar to that of Figure 2) and a control qubit-hosting structure 302 connected by a linear electromagnetic coupler 304. In the example described herein, the target cat-qubit hosting structure 300 comprises a non-linear superconducting circuit 306 to which are connected several signal generators in the form of electromagnetic (e.g. microwave) sources 310, 311, 316 and a load 314.

In a similar manner as described above in relation to Figure 2, the non-linear superconducting circuit 306 comprises at least one resonant portion (denoted by reference numerals 320 and 322 to indicate hosting of the two modes) such that when coupled via a linear coupler 309 to an ATS 308 which acts as an inductive element the non-linear superconducting circuit comprises at least 2 normal modes (or eigenmodes) a and b at frequency $f_a$ and $f_b$ which participate in the ATS. As above, this participation means that a portion or the entirety of the mode magnetic energy is stored in the ATS. This participation can be quantified by the zero-point fluctuation of the superconducting phase across the ATS, noted $\varphi_a$ for first mode a and $\varphi_b$ for second mode b.

In the context of the present embodiment, the physical realization of a CNOT gates between a control qubit with annihilation operator $q$ and a stabilized cat qubit with annihilation operator $a$ usually relies on the use of the following two ingredients.

(1) The confinement of the control qubit such that a microwave drive at its resonant frequency results in a Rabi oscillation. This is typically native in two-level system qubits (e.g. such as transmons) and engineered via parametric interactions for cat qubits.

(2) The addition in the circuit of a 'CNOT' Hamiltonian or 'longitudinal' Hamiltonian with the formula $H_{CX}/\hbar = g_{CX}(q + q^\dagger)(a^\dagger a - \alpha^2)$ where $g_{CX}$ is the amplitude of the Hamiltonian (it is chosen real without loss of generality). This longitudinal coupling can be seen as a drive on the control qubit (first factor) which amplitude depends on the photon number of the target cat qubit (second factor). For this Hamiltonian to be effective on the target cat qubit, one also needs to turn-off the confinement on the target cat qubit, hence the target cat qubit confinement strength should be controllable.

To engineer the CNOT Hamiltonian between the control qubit and the target cat qubit one needs to: (i) couple the control qubit to the ATS such that the phase difference across the ATS writes $\varphi = \varphi_a(a + a^\dagger) + \varphi_b(b + b^\dagger) + \varphi_q(q + q^\dagger)$; and (ii)

pump the common flux at the control qubit frequency $f_q$, $\varphi_\Sigma(t) = \varepsilon_{CX} cos\,(2\pi f_q t)$ with $\varepsilon_{CX}$ the amplitude of the pump drive.

In the rotating frame, the parametric part of the Hamiltonian writes $H_{ATS} = -E_J \varepsilon_{CX} \varphi_q (q + q^\dagger)$. This Hamiltonian can be written to highlight the desired dynamics $H_{ATS} = \hbar g_{CX}(q + q^\dagger)(a^\dagger a - \alpha^2) - E_J \varepsilon_{CX} \varphi_q (q + q^\dagger)$ with $g_{CX} = E_J \varepsilon_{CX} \varphi_q \varphi_a^2 / \hbar$. Since the second mode b (the "buffer") is a lossy mode coupled to a cold environment, one can further assume that $b^\dagger b = 0$, such that the engineered Hamiltonian is

$$H_{ATS} = H_{CX} - E_J \epsilon_{CX} \varphi_q \big(q + q^\dagger\big)\big(1 - \varphi_a^2 \alpha^2\big) + E_J \epsilon_{CX} \frac{\varphi_q^3}{2}\big(q^{\dagger 2} q + q^\dagger q^2\big)$$

This Hamiltonian is close to the CNOT Hamiltonian except for 2 additional terms.

The first corresponds to a linear drive with strength $E_J \epsilon_{CX} \varphi_q \big(1 - \varphi_a^2 \alpha^2\big)/\hbar$. This linear drive can readily be compensated by sending a counter drive directly on the control qubit with the correct relative phase and amplitude that can both be tuned experimentally. The Applicant also found that the accuracy and scope of the compensation can be greatly increased by pumping the differential flux of the ATS with the correct phase and amplitude which writes, at first order in $\varepsilon_{CX}$, $\varphi_\Delta(t) = \frac{2E_J}{E_L} \varphi_\Sigma(t)\big(1 - \varphi_a^2 \alpha^2\big)$. Although the amplitude and phase of the drive can be computed analytically, it is fine-tuned experimentally by ensuring the control qubit remains undergo no drive in the right circumstances. Experimentally, this compensation is much more appropriate than the counter drive on the control qubit because, it directly compensates the spurious linear drive where it originates from (i.e., at the ATS) and does not only try to compensate its main consequences (i.e., the displacement of the control qubit).

The second term cannot typically be fully compensated in a simple manner in view of the design choices made for the present embodiment. Instead, the system may be defined such that the amplitude of this term is much smaller than the amplitude of the CNOT Hamiltonian. In other words, $E_J \epsilon_{CX} \frac{\varphi_q^3}{2} < E_J \epsilon_{CX} \varphi_q \varphi_a^2$, which simplifies into $\varphi_q^2/2 \ll \varphi_a^2$. Typically, the Applicant has found that $\varphi_q \leq \varphi_a/2$ is sufficient minimize the detrimental impacts of this second term.

In summary, provided these two conditions (compensation and smaller amplitude for the second term) are met, the ATS Hamiltonian $H_{ATS}$ can be engineered such that it is close enough to the perfect CNOT Hamiltonian.

For clarity, the set-up applying the external DC magnetic field is not drawn on Figure 4, but can be applied via the 2 bottom mutual inductances of the ATS. A typical implementation consists in interleaving a bias-tee connected to a DC current source to input DC current into the system while letting the electromagnetic radiations go through. The electromagnetic sources 310 and 311 are set-up to modulate respectively the common and differential flux in the ATS which is required to activate parametric interactions. To clearly distinguish the roles of the two sources in the Hamiltonian, an electromagnetic network 324 which applies the correct phase offset is provided in the schematic. Alternatively, each electromagnetic source can be simply coupled to a single node of the ATS and their relative phase and amplitude can be set so as to get the desired flux modulation. In that case, to modulate the common flux the two sources need to address the circuit out of phase and to modulate the differential flux, the two sources need to address the circuit in phase. The 2-to-1 photon conversion necessary to dissipatively stabilize a cat qubit is performed by setting the frequency of the electro-magnetic source 310 to $f_p = |2f_a - f_b|$, and stabilization is further realised by driving the electromagnetic source 316 at the second mode b frequency $f_b$.

When the CNOT gate is not performed, i.e., in a so-called "idle mode", the command circuit controlling the entire system is configured to perform the data (target) cat qubit stabilization exclusively.

The control qubit and the configuration required to perform the CNOT gate according to an embodiment will now be described.

In the example of Figure 4, the control qubit-hosting structure 302 comprises a resonant portion 305 which has a mode q with resonant frequency $f_q$ which hosts the control qubit. Although not shown, qubit-hosting structure 302 will inevitably also include some non-linear element. In various embodiments, the control qubit-hosting structure 302 can be any superconducting qubit hosted in a qubit-hosting structure such as a transmon qubit, a flux-qubit or a fluxonium qubit or any bosonic qubit encoded in a resonator such as a Kerr cat qubit (detuned or not), another dissipative stabilized cat qubit device (squeezed or not), or a cat qubit confined via a two-photon exchange Hamiltonian.

As described above, the control qubit 305 is coupled to the target cat-qubit-hosting structure 300 via a small linear coupler 304. The linear coupler 304 is arranged such that the control qubit 305 slightly hybridizes with the cat qubit device 300 which leads to a small participation of the control qubit in the cat qubit device ATS 308. This participation is denoted $\varphi_q$. As described above with respect to the second spurious member of the engineered Hamiltonian which is not compensated, the fact that this participation remains small compared to the participation $\varphi_a$ of the target cat qubit mode is critical to accurately implement the CNOT Hamiltonian. In various embodiments, coupler 304 can be capacitive, inductive, galvanic or mediated via a resonating bus coupler or an additional linear electromagnetic network. In the embodiment shown in Figure 4, the control qubit-hosting structure 302 is coupled to the first mode $a$ 320. In other embodiments, control qubit-hosting structure 302 can be coupled to the second mode $b$ 322. This coupling location is not critical as mode $a$ and $b$ are typically delocalized in the electromagnetic network comprising the at least one resonant portions $a/b$ 320-322 and coupling to a specific location does not necessarily mean coupling to a specific mode unless the linear microwave network and the ATS are specifically designed to do so.

The control qubit-hosting structure 302 also comprises a signal generator in the form of control signal source 303 which is coupled to the control qubit 305 in order to have the ability to drive it. For instance, source 303 may be an electromagnetic radiation source, which may be used to compensate the linear drive arising from the CNOT Hamiltonian engineering. The control qubit-hosting structure 302 also comprises a detector 8 similar to those described above, here shown coupled to resonant portion 305.

As explained above, a further limitation on the control qubit-hosting structure 302 is that the non-linear superconducting circuit 306, the first mode (hereinafter cat qubit mode) $a$ participates strongly in the ATS 308 as compared to the control qubit mode 305. When the control qubit mode $q$ participates into the ATS via a small linear coupling with the cat qubit mode $a$ in order to perform the CNOT gate - typically, capacitive coupling with capacitance value small compared to the either mode capacitance, inductive coupling with inductance value small compared to the either mode inductance or coupling mediated by a detuned bus resonator -, this coupling is moderate in general. More precisely, the two coupled modes (here $a$ and $q$, alternatively $b$ and $q$) detuning (i.e., the frequency difference $\Delta = |f_a - f_q|$) also plays a role. Indeed, if the two modes have the same resonant frequency, any slight linear coupling would lead to full hybridization and to $\varphi_a \approx \varphi_q$. However, with typical detunings $\Delta/2\pi$ greater than a few tens of MHz, the participation asymmetry is achieved with standard linear couplings.

As explained earlier, the weaker coupling of the control qubit $q$ to the ATS 308 (compared to the target cat qubit mode $a$ coupling to the ATS 308) is key. If the linear coupling is characterized by a strength $g$ as known in the field, then one also needs to ensure the detuning $\Delta$ between the control qubit mode $q$ and the mode it is coupled to ($a$, 320 or $b$, 322) is such that $g < \Delta$. Although this provides design rules, a full electromagnetic (e.g. microwave) simulation or circuit diagonalization of the circuit layout is required to precisely compute the values of $\varphi_a, \varphi_b, \varphi_q$. This feature helps to ensure that the CNOT gate can be performed accurately and that the circuit uses a single ATS in its elements for the CNOT gate, and that parametric pumping of the ATS of the target cat qubit has a single purpose at all times.

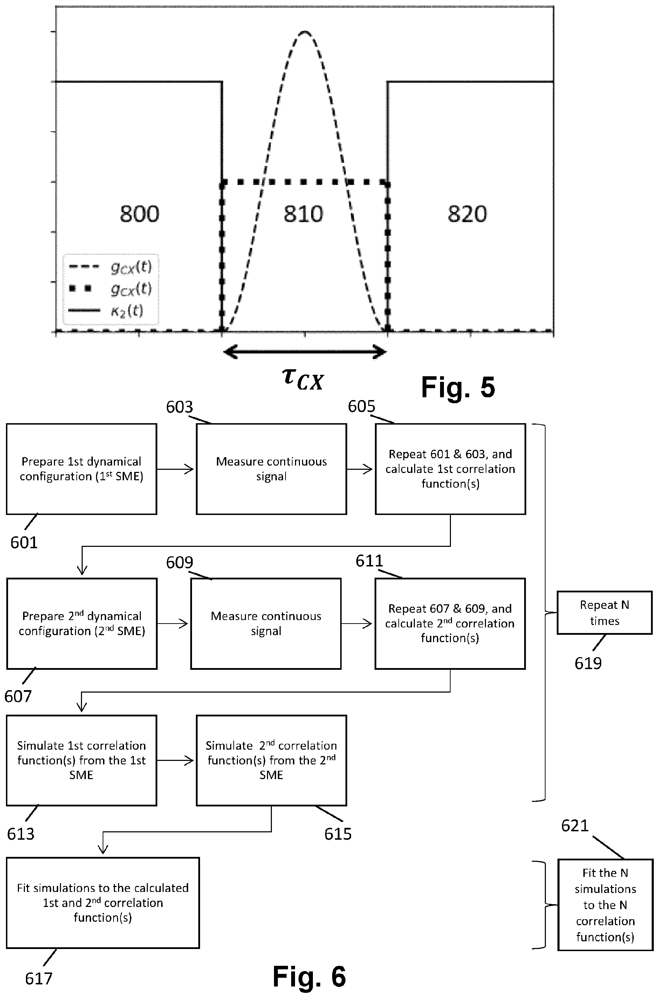

Figure 5 shows exemplary signal timings for operations 800, 810 and 820. During idle mode, the data cat qubit is stabilized with two-photon dissipation $\kappa_2$. When the gate starts, this dissipation is turned off such that the CNOT Hamiltonian can be effective. Finally, after a time $\tau_{CX} = \pi/(4\alpha g_{CX})$ the CNOT Hamiltonian is turned off and the two-photon dissipation is turned back on again. At no point in time does the ATS serve two purposes at once, which guarantees experimental robustness. The limitations for the CNOT pulse strength and shape (dotted or dashed lines) will now be explained.

The CNOT Hamiltonian effectively acts as a linear drive on the control qubit q which strength depends on the number of photons in the target cat qubit a. The nature of the control qubit q sets upper bounds on the maximal effective drive strength $g_{CX}\alpha$.

There exist two main cases. In the first case, the control qubit q is defined by a real or Hamiltonian gap - for a two-level system this gap is the anharmonicity $|\omega_{12} - \omega_q|$ where $\omega_q$ is the qubit frequency or the frequency of ground to first excited state transition and $\omega_{12}$ is the frequency of first excited to second excited state transition (this may for instance be a transmon). In that case, the adiabatic theorem applies and states that the qubit stays exponentially confined despite the action of the effective drive provided $g_{CX}\alpha < |\omega_{12} - \omega_q|$. For instance, if the ancilla qubit is a cat qubit with amplitude $\alpha_c$ confined by a Kerr Hamiltonian (scheme (B) above) the condition writes $g_{CX}\alpha < K\alpha_c^2$. If it is confined by a detuned Kerr Hamiltonian (scheme (C) above) the condition writes $g_{CX}\alpha < K\left(\alpha_c^2 + \sqrt{\Delta}\right)$. If it is confined by a TPE Hamiltonian (scheme (D) above), the condition writes $g_{CX}\alpha < \alpha_c g_2$.

In the second case, the control qubit q is defined by an imaginary gap or equivalently is stabilized by dissipation. In that case, the adiabatic theorem does not apply and the gate strength has to be much smaller than the imaginary gap in order to avoid undesired decoherence of the ancilla qubit during the gate. In practice, for an ancilla cat qubit stabilized by two-photon dissipation with rate $\kappa_2$ (a) the condition writes $g_{CX}\alpha \ll \kappa_2\alpha_c^2$, which applies also to schemes (G) and (H) above. For a squeezed ancilla cat qubit (scheme (E) above), the condition writes $g_{CX}\alpha \ll \kappa_2\alpha_c^2 e^{2r}$ where $r$ is the squeezing parameter, and a similar condition may be derived for the "moon cat" stabilization (scheme (F) above).

On top of the gate strength requirement, the nature of the control qubit confinement sets constraints on how the gate should be applied. In the case of a dissipative ancilla qubit, the CNOT Hamiltonian can be turned on instantaneously as shown by the dashed lines of the above figure as soon as the data cat qubit confinement is turned off (solid line $\kappa_2(t)$). In

the case of a Hamiltonian ancilla qubit, the CNOT Hamiltonian may be turned on smoothly such that the spectral content of the pulse $g_{CX}(t)$ (dotted lines) does not contain frequency components above the gap. Typically, a gaussian pulse can be used. On the above figure, a cosine shape is used for its finite temporal envelope. In the case of a time dependent $g_{CX}$, the pulse amplitude should be such that $\int 4\alpha g_{CX}(t)dt = \pi$.

As will be appreciated, other CNOT methods may be applied. Furthermore, other multi-qubit gates, such as a Toffoli gate between or multi-qubit CNOT or other gates may be implemented involving two or more qubit-hosting structures 6 or quantum system 1. For such systems and operations, be it for single- or multi-qubit systems, the various parameters describing the coupling strengths and control signals required for various dynamical configurations need to be characterized.

## Characterization method

The present Inventors have developed a method for characterizing a quantum system 1, whether it be comprised of a single qubit-hosting structure or multiple qubit-hosting structures such as those outlined in the above embodiments, and which crucially operates as a non-linear dynamical system.

Figure 6 shows a flow diagram of the method steps for characterizing a quantum system 1 which is operable as a non-linear dynamical system, for instance as described above in relation to Figures 1-4.

In a first step 601, the one or more signal generators 11,13 are used to physically prepare the quantum system 1 in a first dynamical configuration.

The evolution of a continuously measured quantum system is modelled by the stochastic master equation (SME) formalism. The SME describes the evolution of the quantum state and the corresponding signal $I_t$ measured by the observer at time $t$.

Specifically, an observer describes the state of an open quantum system 1 by a mixed quantum state, the density matrix $\rho_t$ at time $t$. Mathematically, we associate with the system a Hilbert space $\mathcal{H}$ of dimension $n_{\mathcal{H}}$ (possibly infinite), and the quantum state is a Hermitian positive semi-definite operator with unit trace: $\rho \in \Omega_{\mathcal{H}} = \{\rho \in \mathcal{H} , \rho \geq 0, Tr[\rho] = 1\}$. Different laws of evolution describe the trajectory of the quantum state $\{\rho\}_{t\in[0,T]}$ in state space $\Omega_{\mathcal{H}}$. In the Markovian scenario there are two situations: if the observer cannot observe the quantum systems composing the environment, the state trajectory is described by the Lindblad master equation (ME). Conversely, if the observer measures these external degrees of freedom, the state trajectory is governed by the stochastic master equation (SME).

The ME describes the evolution of the average state $\overline{\rho_t}$ $\rho$t when the observer does not monitor the environment, for example for a purely dissipative process or for unread measurements. The evolution is deterministic, it is described by the linear ordinary differential equation (ODE): $d\bar{\rho}_t/dt = \mathcal{L}_t(\bar{\rho}_t) = -i[H_t, \bar{\rho}_t] + \sum_{k=1}^N \mathcal{D}_{L_{k,t}}(\bar{\rho}_t)$, where $\mathcal{L}_t$ is the Liouvillian superoperator, $H_t$ is the Hamiltonian of the system, $\mathcal{D}_L(\rho) = L\rho L^\dagger - (1/2)L^\dagger L\rho - (1/2)\rho L^\dagger L$ is the standard dissipator and $\{L_{1,t} ..., L_{N,t}\}$ is a collection of jump operators.

For simplicity, we consider in the following a single loss channel with time-independent loss operator $L$. In some situations, this loss channel is fully or partially measured by the observer. The acquired information can be used to update the system state, which gives a better (less mixed on average) description of the state trajectory than the ME. This is precisely the purpose of the SME.

The SME describes the evolution of the state $\rho_t$ when the observer continuously measures the loss channel with a detector. The evolution is non-deterministic, it is described by the non-linear stochastic differential equation (SDE): $d\rho_t = \mathcal{L}_t(\rho_t)dt + \mathcal{M}_L(\rho_t, dY_t)$, where $\mathcal{M}_L$ is a superoperator which depends on a stochastic process $dY_t$: the measured signal. The first part of the equation is the deterministic Lindblad update. The second part models the stochastic back-action of the measurement, which is taken into account continuously, at each time.

The detector output is a continuous-time signal defined by the rate of change of the stochastic process $dY_t$ over time: $I_t = dY_t/dt$. The path followed by the quantum state over time is entirely determined by this measured signal: each time the observer performs a new experiment (labelled $j$), they measure a particular realisation of the stochastic signal $\left\{I_t^{(j)}\right\}_{t\in[0,T]}$, which corresponds to a unique trajectory $\left\{\rho_t^{(j)}\right\}_{t\in[0,T]}$ in state space. These trajectories are called quantum trajectories, and the state $\rho_t$ is said to be conditioned on the information measured by the observer up to time $t$.

There are two main types of SMEs: the jump SME and the diffusive SME. The difference lies in the type of detector: if the output is binary (0 or 1), the evolution is described by the jump SME, and otherwise if the output takes a continuous range of values, the evolution is described by the diffusive SME. For example, in quantum optics, the jump SME models photodetection, while the diffusive SME models homodyne or heterodyne detection. Mathematically, they differ by the stochastic process $dY_t$ involved, and the form of the measurement back-action superoperator $\mathcal{M}_L$.

For the jump SME, most of the time the detector detects nothing and outputs 0, and sometimes, upon detection, the detector clicks, and outputs 1. This stochastic process is modelled by the point process $dY_t = dN_t$ with law:

$$\mathbb{P}[dN_t = 0] = 1 - \mathbb{P}[dN_t = 1] \text{, and } \mathbb{P}[dN_t = 1] = \left(\theta + \eta Tr[L\rho_t L^\dagger]\right)dt \text{, where here } \theta \geq 0 \text{ is the dark}$$

count rate (taking into account false clicks), and $0 < \eta \leq 1$ is the detector efficiency (taking into account missed clicks). The

measured signal $I_t = dN_t/dt$ is the rate of change of the counting process $N_t = \int_0^t dN_t$, which counts the number of jumps occurring in the time interval $[0, t)$. The measurement back-action is defined by: $\mathcal{M}_L(\rho, dN) = \left(\frac{\theta\rho + \eta L\rho L^\dagger}{\theta + \eta Tr[L\rho L^\dagger]} - \rho\right)(dN - $

$(\theta + \eta Tr[L\rho L^\dagger])dt)$, as described for instance in Rouchon, Pierre. "A tutorial introduction to quantum stochastic master equations based on the qubit/photon system." Annual Reviews in Control 54 (2022): 252-261.

For the diffusive SME, the detector output is real-valued, and continuous in time. This stochastic process is given by the Itô process $dY_t$ defined by: $dY_t = \sqrt{\eta}Tr\left[\left(L + L^\dagger\right)\rho_t\right]dt + dW_t$, where again $0 < \eta \leq 1$ is the detector efficiency (taking into account measurement imperfections), and $W_t$ is a Wiener process taking independent Gaussian distributed increment. The measurement back-action is defined by:

$$\mathcal{M}_L(\rho, dY) = \sqrt{\eta}\left(L\rho + \rho L^\dagger - Tr\left[\left(L + L^\dagger\right)\rho\right]\rho\right)\left(dY - \sqrt{\eta}Tr[(L + L^\dagger)\rho]dt\right) \text{, as described for instance in}$$

Jacobs, Kurt, and Daniel A. Steck. "A straightforward introduction to continuous quantum measurement." Contemporary Physics 47.5 (2006): 279-303.

In the jump SME case, the quantum trajectory is discontinuous: the state evolves continuously in state space as long as the detector detects nothing, but upon detection it undergoes a sudden jump. In the diffusive SME case, the state evolves continuously in state space, following a Brownian motion-like trajectory. The unconditioned trajectory described by the ME is recovered by averaging over all possible realisations of the stochastic process driving the SME (or equivalently, over all possible quantum trajectories or measured signals): $\bar{\rho}_t = \mathbb{E}[\rho_t]$. Here $\mathbb{E}$ denotes the statistical

average over $N_t$ or $W_t$. Note that although the quantum trajectories described by the jump SME and the diffusive SME are very different in nature, the average state trajectory does not depend on the stochastic process averaged over (jump or diffusive).

As will be appreciated, the above continuous-time formulations for the ME and SME can be readily converted into a discrete-time formulation suitable for numerically simulation, for instance via using the well-known Kraus operators formulation.

As such, the evolution of quantum system 1 can be modelled by a SME, and specifically the initial state, the form the Hamiltonian and the various jump operators entering the dissipator. The skilled person would be well aware of how to provide such a model for a particular quantum system 1, as described by a few exemplary embodiments below. Importantly, the model of a quantum system 1 is typically known apart from the values of $p$ parameters corresponding to various static or dynamical terms, which can be gathered in a vector $\boldsymbol{\theta_{true}} \in \mathbb{R}^p$. These parameters may appear in different parts of the model, such as the initial state, Hamiltonian, jump operators, dark counts or efficiencies, or filter functions as described in more detail below.

The first dynamical configuration prepared in step 601 is thus describable via a first stochastic master equation having a first plurality of physical parameters $\boldsymbol{\theta_{true}^{(1)}}$, where the superscript in parentheses merely indicates that this refers to the first dynamical configuration.

However, the continuous signal $I_t$ in relation to the SME is never available to the operator of quantum system 1, it is merely a mathematical object, and not a tangible, measurable quantity. It can be loosely thought of as a series of Dirac delta distributions for the jump SME, and as white noise with a trend for the diffusive SME, and this continuous-time signal is referred to as the sharp signal herein.

The actual measured signal is processed by an acquisition chain consisting of amplifiers, filters and digitisation components (e.g. an analogue-to-digital converter, ADC, or a photocounter) generally comprised by detector 8. This chain converts the continuous-time sharp signal $I_t$ into a discrete-time signal $\{I_0,...,I_N\}$. Each value $I_k$ is defined by integrating $I_t$ against the transfer function $f_k$ of the acquisition chain for the $k$-th time bin: $I_k = \int f_k(t)I_t dt$. The only quantity available to the experimentalist is this discretised measurement record $\{I_0, ..., I_N\}$. It is particularly important to take this filtering into account when the digitisation time is not negligible compared to the system timescales, as is often the case for superconducting circuits, for example.

The digitisation is usually performed by averaging the signal over a duration $\Delta t$ (a time bin), which is longer than the bandwidth of the various acquisition chain components. In embodiments, the filter function for the $k$-th time bin can then be approximated by a rectangular window $f_k$ of duration $\Delta t$.

In the case of the jump SME, the detector typically gives the number of click events over a given time interval, and the filter function $f_k = \mathbb{1}_{[k\Delta t,(k+1)\Delta t)}$ is the indicator function defined by

$$\mathbb{1}_\Omega(t) = 1$$

if $t \in \Omega$ and

$$\mathbb{1}_\Omega(t) = 0$$

otherwise, wherein [...) defines the hal-open interval such that $x \in [0,1)$ means $0 \leq x < 1$. The resulting signal takes discrete values $I_k \in \mathbb{N}$: $I_k = \int_{k\Delta t}^{(k+1)\Delta t} I_t dt = N_{[k\Delta t,(k+1)\Delta t)}$, where the counting process $N_{[t_1,t_2)} = \int_{t_1}^{t_2} dN_t$ counts the number of jumps occurring in the time interval $[t_1, t_2)$. In the limit where there is at most one jump per time bin $\Delta t$, the signal is binary $I_k \in \{0,1\}$, it is just a sequence of 0s and 1s: 00100010... , and the filtering accounts for the inevitably finite time resolution of the detector.

In the case of the diffusive SME, the signal is typically averaged over some duration $\Delta t$, the filter function is $f_k = \left(\frac{G}{\Delta t}\right)\mathbb{1}_{[k\Delta t,(k+1)\Delta t)}$ with $G$ the gain of the acquisition chain. The resulting signal is continuous-valued $I_k \in \mathbb{R}$: $I_k = (G/\Delta t)\int_{k\Delta t}^{(k+1)\Delta t} I_t dt$.

In both case, we call this digitised signal the binned signal. From a practical point of view, this discrete-time signal $I_k$ is the only quantity available to the operator of quantum system 1.

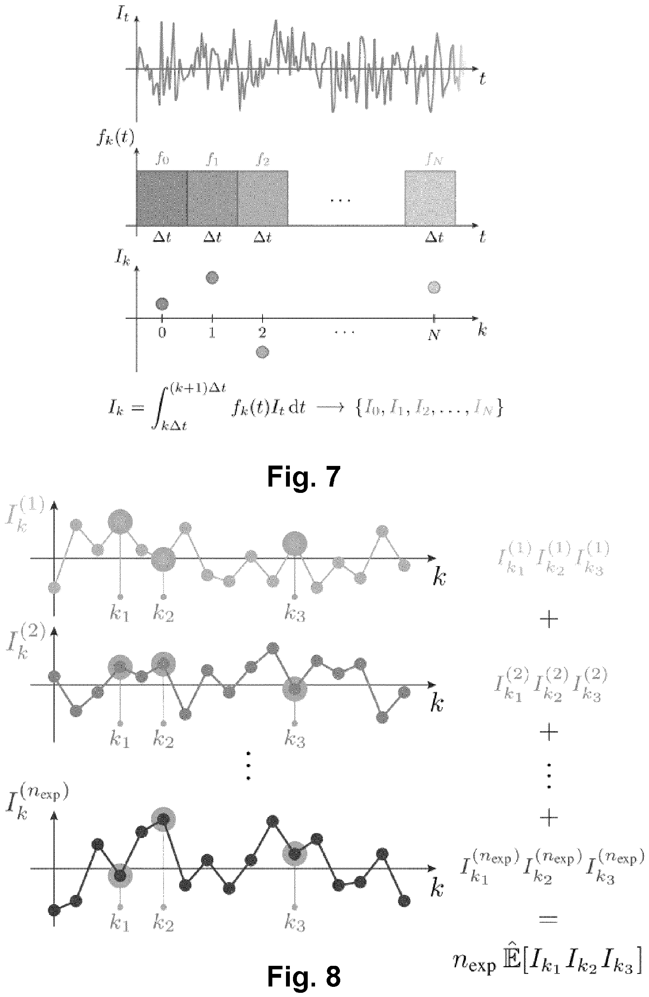

This digitisation process is illustrated in Figure 7 for the diffusive SME, wherein the filtering and digitisation of the sharp diffusive signal $I_t$ against the rectangular window filter functions $f_k$ in Figure 7 results in a discrete-time binned signal $\{I_0, ..., I_N\}$,

Returning to Figure 6, in a second step 603, the detector 8 is thus used to physically measure a time-continuous signal from the quantum system 1 in the first dynamical configuration, which provides a first measured time-discrete signal.

The statistics of this time-discrete signal can be estimated experimentally by performing the same experiment several times and averaging over the different realisations. These statistics include the mean of the signal $\mathbb{E}[I_k]$ at time bin $k$, the two-point correlation function $\mathbb{E}[I_{k_1} I_{k_2}]$ between bins $k_1$ and $k_2$, and more generally any n-point correlation functions $\mathbb{E}[I_{k_1} ... I_{k_n}]$ for time bins $k_1 \leq \cdots \leq k_n$, where IE denotes the statistical average over the stochastic process driving the SME.

In particular, the present Inventors have recognised that a stochastic process is characterizable by its correlation functions.

Thus, as shown in a next step 605 of Figure 6, the physically preparing 601 and physically measuring steps 603 are repeated a plurality of times to provide a plurality of first measured signals for the first configuration, and one or more first correlation function(s) are calculated from the plurality of first measured continuous signals.

Specifically, estimating the correlation functions of the measured signal is straightforward experimentally. For each realisation of the experiment (labelled $j$), the operator has access to a new discrete-time digitised signal $\{I_0^{(j)}, ..., I_N^{(j)}\}$. The $n$-point correlation function is given by:

$$\mathbb{E}\left[I_{k_1} ... I_{k_n}\right] = \lim_{n_{exp} \to \infty} \frac{1}{n_{exp}} \sum_{j=1}^{n_{exp}} I_{k_1}^{(j)} ... I_{k_n}^{(j)}$$

with $\mathbb{E}$ the statistical average over an infinite number of realisations of the experiment. In practice, the correlation functions are estimated with some statistical error due to the finite number of realisations. We denote $\widehat{\mathbb{E}}[I_{k_1} ... I_{k_n}]$ the experimental estimate of the expectation value:

$$\widehat{\mathbb{E}}\big[I_{k_1}\ldots I_{k_n}\big] = \frac{1}{n_{exp}} \sum_{j=1}^{n_{exp}} I_{k_1}^{(j)}\ldots I_{k_n}^{(j)}$$

Figure 8 illustrates the computation for a three-point correlation function: $\widehat{\mathbb{E}}\big[I_{k_1} I_{k_2} I_{k_3}\big]$.

The present Inventors have also recognised that, in embodiments when starting from the quantum system 1 in a steady-state, a single long trajectory can be measured, instead of repeating the experiment multiple times. The measured signal can then be divided into $n_{exp}$ chunks, and the average is computed by considering each chunk as a different realisation of the experiment. Certain technical considerations must be taken into account for this approach to be rigorous: (i) the steady state must be ergodic under continuous measurement, and (ii) there must be sufficient statistical independence between the different chunks (which is generally ensured by the fact that correlation functions decay to zero at long times).

Generally, it is expected that each parameter has a unique impact on the evolution of the state, and therefore on the statistics of the measured signals. To simultaneously estimate the $p$ parameters, first some correlation functions of interest are estimated/measured experimentally (i.e. calculated from physically measured data), and then the correlation functions are numerically simulated from the model of the system (namely the first SME) and fit to these observations, for example with a least-squares method. The result is a vector of parameters $\boldsymbol{\theta}_{fit}^{(1)}$ that minimises the difference between the experimental estimate and the theoretical model. The expectation is that the estimated parameters $\boldsymbol{\theta}_{fit}^{(1)}$ are close to the true parameters $\boldsymbol{\theta}_{true}^{(1)}$.

However, the present Inventors have recognised that the parameters that we wish to estimate may be degenerate or non-identifiable: different combinations of parameters result in the same correlation functions.

For instance, consider a quantum system 1 being a lossy harmonic oscillator with Hamiltonian $H = \omega a^\dagger a$ and jump operator $L = \sqrt{\kappa}\, a$, where $a$ is the oscillator annihilation operator, $\omega$ is the oscillator frequency, and $\kappa$ is the single-photon loss rate. The loss channel is monitored with efficiency $\eta$ by homodyne detection along the X quadrature. Suppose the system starts from a coherent state $\rho_0 = |\alpha_0\rangle\langle\alpha_0|$ and our goal is to find the values of the four parameters $\theta = (\omega, \kappa, \eta, \alpha_0)$. Then it is straightforward to see that the parameters $\eta$ and $\alpha_0$ are fundamentally non-identifiable from the measured signal. Indeed, the state remains a coherent state during the evolution: $\rho_t = |\alpha_t\rangle\langle\alpha_t|$ with $\alpha_t = \alpha_0 e^{-\kappa/2t}e^{-i\omega t}$, because the measurement backaction is null at all time: $\mathcal{M}(\rho_t, dY_t) = 0$. The measured signal allows to uniquely identify $\kappa$ and $\omega$, but not $\eta$ and $\alpha_0$, as they only appear as a product $\sqrt{\eta}\alpha_0$ in the measured signal.

The present Inventors have therefore discovered that such a degeneracy or non-identifiability may be addressed by evaluating the correlation functions of the quantum system 1 in another, different, dynamical configuration.

Taking the simple example of the lossy harmonic oscillator, placing the quantum system 1 into a second, different, dynamical configuration could for instance be to add a known linear drive, make the oscillator anharmonic, and/or simply prepare quantum system with a different value of the initial state complex amplitude $\alpha_0$ linked by a known proportionality coefficient (for instance $k\alpha_0$, where $k$ is known).

Thus, in a third step 607, the one or more signal generators 11,13 are used to physically prepare the quantum system 1 in a second dynamical configuration different to the first dynamical configuration. Crucially, the second dynamical configuration is describable via a second SME having a second plurality of physical parameters $\boldsymbol{\theta}_{true}^{(2)}$, wherein a subset of the second plurality of physical parameters $\boldsymbol{\theta}_{true}^{(2)}$ is a shared subset with a subset of the first plurality of physical parameters $\boldsymbol{\theta}_{true}^{(1)}$, wherein the shared subset of physical parameters characterizes the quantum system 1.

In a step 609, the detector 8 is again used to physically measure a continuous signal from the quantum system 1 in the second dynamical configuration, in the same manner as described above in relation to the first dynamical configuration, which provides a second measured continuous signal.

For the avoidance of doubt, herein the "first" correlation function(s) should not be interpreted as "one-point" correlation functions, but rather is/are the correlation function(s) of the first dynamical configuration. Thus, these may include the one-point correlation function, but also or alternatively might include higher-order point correlation functions. In a similar vein, the "second" correlation function(s) should not be interpreted as "two-point" correlation functions, but rather is/are the correlation function(s) of the second dynamical configuration (which for instance may include the one-point correlation function of the second dynamical configuration, or indeed the two-point correlation function or any other correlation function).

In a step 611, the physically preparing 607 and physically measuring steps 609 are repeated a plurality of times to provide a plurality of second measured signals, and one or more second correlation function(s) are calculated from the plurality of second measured continuous signals, in the same manner as described above in relation to the first dynamical configuration. Again, when starting from the quantum system 1 in a steady-state for the second dynamical configuration, a single long trajectory (i.e. a single acquisition) can be measured and split up into subsections, instead of repeating the experiment multiple times.

In a step 613, a plurality of the one or more first correlation function(s) are numerically simulated from the first SME, wherein at least one physical parameter of the first plurality of physical parameters has a different value when numerically simulating each of the simulated one or more first correlation function(s). This numerically enables fitting the one or more first correlation function(s) in a later step.

In a step 615, a plurality of the one or more second correlation function(s) are numerically simulated from the second SME, wherein at least one physical parameter of the second plurality of physical parameters has a different value when numerically simulating each of the simulated one or more second correlation function(s). Again, this numerically enables fitting the one or more second correlation function(s) in a later step.

Thus, in a step 617, the simulated one or more first (respectively second) correlation functions are fitted to the calculated one or more first (respectively second) correlation functions. For the avoidance of doubt, here "calculated" refers to those correlation functions calculated from physically measured data. By fitting, it will be generally understood that the vector of $p$ parameters $\theta$ entering the equations used for simulating the one or more first (respectively second) correlation functions are modified to produce particular simulations of the one or more first (respectively second) correlation functions. Any known fitting procedure may then be applied, which compares the simulations to the calculated correlation functions, modifies the vector of parameters and iterates until the simulation has satisfactorily converged to the calculated correlation functions. The vector of parameters may thus be $\theta_{fit}^{(1,2)}$ that minimises the difference between the experimental estimate and the theoretical model.

Accordingly, values can be assigned to the shared subset of physical parameters which characterizes quantum system 1 and which are shared between the first set of physical parameters $\theta_{true}^{(1)}$ and the second set of physical parameters $\theta_{true}^{(2)}$.

In embodiments, the minimisation may be solved using the Levenberg-Marquardt algorithm using the "least_squares()" function from the SciPy library at Pauli Virtanen et al. SciPy 1.0: Fundamental Algorithms for Scientific Computing in Python, Nature Methods, 17 (2020).

In embodiments, access to the gradient can greatly improve the fit time and accuracy when estimating many parameters at once. This can be achieved by using modern automatic differentiation libraries to integrate the system of ODEs. For the examples described herein, the present Inventors used the "Tsit5 ODE solver" of the Diffrax library from https://github.com/patrick-kidger/diffrax to compute the correlation functions. However, any standard ODE solvers library or methods therein is suitable, especially if the gradient is not needed.

The present Inventors have recognized that, in an optional particularly advantageous step 619, steps 601-615 may be repeated a further number of times, and N times in total such that N sets of one or more correlation functions are physically measured and are numerically simulated. Thus in an optional step 621, each of the N different simulated correlation function(s) may be fit with the corresponding N sets of different correlation function(s) which were physically measured so as to assign values to the shared subset of physical parameters which is shared by all of the corresponding N sets of physical parameters (i.e. N vectors vector of parameters $\theta_{true}^{(1)}, \theta_{fit}^{(2)}, ..., \theta_{fit}^{(N)}$ ).

In general, the present Inventors have discovered that the greater number of dynamical configurations (and the more random the differences between each, e.g. the more random the drives in the above example of a driven lossy harmonic oscillator), then the less likely the overfitting procedure. In particular, it is beneficial to prepare, measure, and fit at least 3 different dynamical configurations, and preferably greater than or equal to 10.

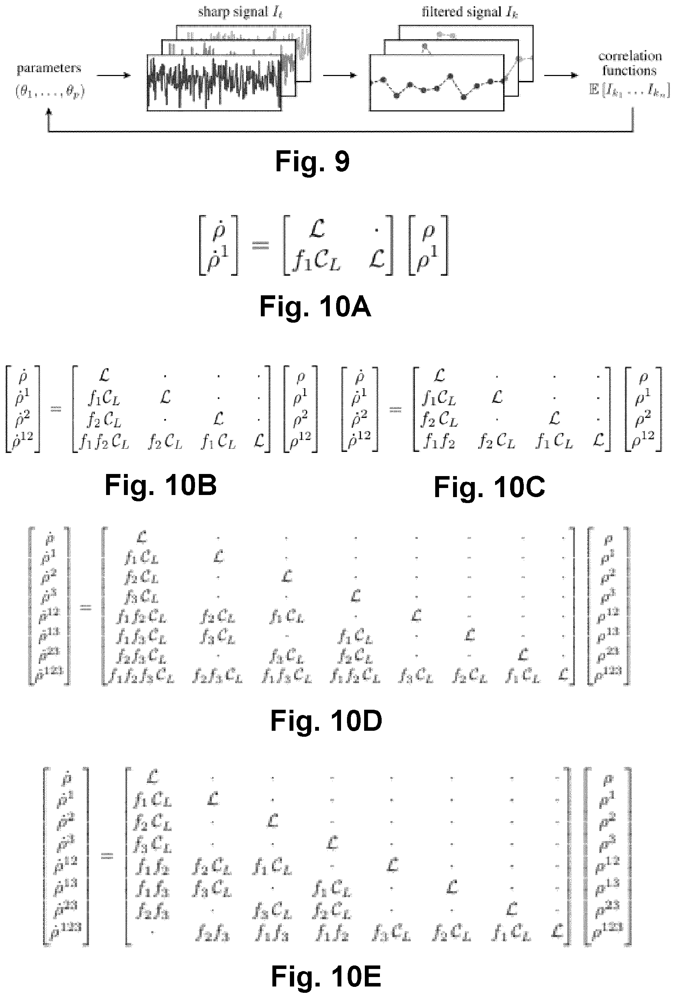

Figure 9 illustrates the method for extracting physical parameters by fitting correlation function. Approximative or exact formulae may be used to compute these simulated quantities directly from the SME and the initial state of the quantum system 1, as discussed in more detail below.

In particular, the present Inventors have recognised particularly numerically efficient methods for numerically simulating correlation functions for fitting physical parameters.

An explicit formula for simulating correlation functions from the sharp signal for different times $t_1 < \cdots < t_n$ for a constant Liouvillian $\mathcal{L}_t = \mathcal{L}$ (i.e. time-constant) can be given by

$$\mathbb{E}\left[I_{t_1} \dots I_{t_n}\right] = Tr\left[\mathcal{C}_L e^{(t_n - t_{n-1})\mathcal{L}} \dots \mathcal{C}_L e^{t_1 \mathcal{L}}(\rho_0)\right],$$

where $\mathcal{C}_L$ $(O)$ is the correlation superoperator for an operator $O$, and is defined either by: (i) $\mathcal{C}_L$ $(O) = \theta O + \eta L O L^\dagger$ for the jump SME, or (ii)

$$\mathcal{C}_L(O) = \sqrt{\eta}(LO + OL^\dagger)$$

for the diffuse SME, wherein the notations take the same forms as defined above. Namely, operator $\rho_0$ is the density matrix describing the initial state of quantum system 1, $\theta$ is the dark count rate, $\eta$ is the detector efficiency, and $L$ is loss or jump operator (which can be time-independent or take different forms at different times). Said otherwise, the correlation functions can be simulated by taking the trace of a peculiar operator, which is obtained by evolving the initial state with the usual Lindblad evolution but interspersed with the application of the correlation superoperator at each correlation time $t_k$.

The present Inventors have recognised that, if the digitisation time $\Delta t$ is very small compared to the fastest timescale of the dynamics of quantum system 1, then the correlation functions of the binned signal can be approximated with the sharp signal formula described above

$$\mathbb{E}\left[I_{t_1} \dots I_{t_n}\right] = Tr\left[\mathcal{C}_L e^{(t_n - t_{n-1})\mathcal{L}} \dots \mathcal{C}_L e^{t_1 \mathcal{L}}(\rho_0)\right].$$

Namely $\mathbb{E}\left[I_{k_1} \dots I_{k_n}\right] \approx \mathbb{E}\left[I_{t'_1} \dots I_{t'_n}\right]$, wherein the binned signal $I_k$ is replaced with the sharp signal $I_{t'_k}$ in the center of the time bin $tk = k\Delta t + \Delta t/2$. Importantly, this approximation is not valid for coincident bins. Moreover, particular care must be taken to ensure that $\Delta t$ is sufficiently small for the approximation to be correct. A good way to control the validity of the approximation is to compute the exact formula and verify that it matches.

The sharp signal correlation functions $\mathbb{E}\left[I_{t_1} \dots I_{t_n}\right]$ can be computed by evolving the initial state with the ME using any regular solver known in the art, and applying the correlation superoperator at each correlation time. The numerical cost is the same as solving a single ME, up to the final correlation time $t_n$.

For filtered signals - the correlation function of the filtered signal $\mathbb{E}\left[I_{f_1} \dots I_{f_n}\right]$ can be simulated by explicitly computing the n-dimensional integral of $\mathbb{E}\left[I_{t_1} \dots I_{t_n}\right]$ against the corresponding filter functions

$$\mathbb{E}\left[I_{f_1} \dots I_{f_n}\right] = \int_{t_1} \dots \int_{t_n} \mathbb{E}\left[I_{t_1} \dots I_{t_n}\right] f_1(t_1) \dots f_n(t_n) dt_1 \dots dt_n \text{, where}$$

$$\mathbb{E}\left[I_{t_1} \dots I_{t_n}\right] = Tr\left[\mathcal{C}_L e^{(t_n - t_{n-1})\mathcal{L}} \dots \mathcal{C}_L e^{t_1 \mathcal{L}}(\rho_0)\right]$$

as above when the filter functions have on-overlapping supported. However, this expression quickly becomes prohibitively expensive to compute for large Hilbert space dimensions, and correlation functions involving more than two points. As detailed in Guilmin, Pierre, Pierre Rouchon, and Antoine Tilloy. "Correlation functions for realistic continuous quantum measurement." IFAC-PapersOnLine 56.2 (2023): 5164-5170, there is a faster and more practical way to compute these quantities by solving modified Lindblad master equations, which we now recall, which the present Inventors have recognised may beneficially be applied in the present characterisation method so as to enable faster simulations required for fitting.

Explicitly, taking $j = \alpha_1 f_1 + \dots + \alpha_n f_n$ with $\{\alpha_1, \dots, \alpha_n\}$ real numbers, we have

$$\mathbb{E}\left[I_{f_1} \dots I_{f_n}\right] = Tr\left[\frac{\partial^n \rho_\infty^j}{\partial \alpha_1 \dots \partial \alpha_n}\Big|_{\alpha_1, \dots, \alpha_n = 0}\right] = Tr\left[\rho_\infty^{1, \dots, n}\right],$$

where $\rho_\infty^j$ is the so-called generating density matrix at long time, where the generating density matrix at time $t$ is given by

$$\rho_t^j = \mathbb{E}\left[\exp\left(\int_0^t j_{t'}\, dY_{t'}\right)\rho_t\right]$$ and $dY_{t'} = I_t dt'$.

The generating density matrix at time $t$, $\rho_t^j$, obeys the so-called generalised quantum master equation $d\rho_t^j/dt = \mathcal{L}_t^j(\rho_t^j)$, where $\mathcal{L}_t^j$ is another superoperator and is defined either by: (i)

$$\mathcal{L}_t^j = \mathcal{L}_t + (e^{jt} - 1)\mathcal{C}_L$$

for the jump SME, or (ii)

$$\mathcal{L}_t^j = \mathcal{L}_t + j_t \mathcal{C}_L +$$

$$j_t^2/2\, \mathcal{J}$$

for the diffuse SME with $\mathcal{J}$ the identity superoperator, wherein like-notations take the same forms as defined above.

Thus, to compute $\rho_\infty^{1,\dots,n}$, one can (manually) forward differentiate the ordinary differential equation (ODE) $d\rho_t^j/dt = \mathcal{L}_t^j(\rho_t^j)$:

$$\frac{d\rho_t^{1,\dots,n}}{dt} = \left.\frac{\partial^n\left(\mathcal{L}_t^j(\rho_t^j)\right)}{\partial\alpha_1\dots\partial\alpha_n}\right|_{\alpha_1,\dots,\alpha_n=0}$$

Recursively distributing the derivatives results in an augmented system of coupled linear ODEs (called sensitivity equations), which involve all unordered combinations of partial derivatives with respect to a subset of $\{\alpha_1, \dots, \alpha_n\}$. Each ODE describes the evolution of a fictitious state under the regular Lindblad evolution, with the introduction of additional coupling source terms. The system is solved from time 0 to time $T$, where $T$ is chosen to be greater than any time in the support of $f_1, \dots, f_n$.

Figures 10A-10E give the system of ODEs to solve (in matrix form) to compute correlation functions up to order three for a single signal, wherein for compactness, we drop the time index and mark null entries with a dot. Figure 10A shows the ODE to solve for calculating one-point correlation functions for both the jump and the diffusive SME. For instance, for the one-point correlation function $\mathbb{E}\left[I_{f_1}\right]$ this ODEs system is solved from time $t = 0$ to time $t = T$ (greater than any time in the support of $f$) by evolving two fictious states $(\rho_t, \rho_t^1)$ with initial conditions $(\rho_{t=0}, 0)$, with the one-point correlation function of the filtered signal $I_{f_1}$ being then given by the trace of $\rho_{t=T}^1$ at final time $t = T$: $\mathbb{E}\left[I_{f_1}\right] = Tr[\rho_T^1]$.

Figure 10B shows the ODE to solve for calculating two-point correlation functions for the jump SME. Figure 10C shows the ODE to solve for calculating two-point correlation functions for the diffusive SME. Figure 10D shows the ODE to solve for calculating three-point correlation functions for the jump SME. Figure 10E shows the ODE to solve for calculating three-point correlation functions for the diffusive SME. These can be solved in a similar manner as described above in relation to Figure 10A. In particular, the system of ODEs can be viewed as a single large linear ODE, which can be integrated using commonly available ODE solvers, such as high-order Runge-Kutta schemes. Note that for large Hilbert space dimensions, it is not recommended to explicitly store or diagonalize the full matrix as shown in Figures 10A-10E, for both memory and runtime purposes. A better solution is to apply the generator to the state at each time step, which costs only $\vartheta(n_{\mathcal{H}}^2)$ in memory and $\vartheta(n_{\mathcal{H}}^3)$ in time (where $n_{\mathcal{H}}$ is the Hilbert space dimension). For low-order correlation functions, the numerical cost is the same as solving a few MEs up to time $T$.

As discussed, binned signals are a special case of filtered signals where the filter functions are rectangular windows. In particular, if the Liouvillian is time-independent, the generator of the large ODE is piecewise constant in time. Thus, it can be integrated by successively exponentiating the generator over each corresponding time interval. For large Hilbert space dimensions, it is not necessary to compute the exponential explicitly, but simply its action on an operator. This can be done efficiently using e.g. Krylov subspace methods. For low-order correlation functions, the numerical cost is the same as solving a few MEs with a time-independent Liouvillian up to time $T$.

Moreover, the present Inventors have recognised that simulating correlation functions from binned signals may be particularly numerically advantageous as, for non-coincident time bins, all cross terms involving more than one filtering function (e.g. $f_1 f_2$ shown in Figure 10C) are null. Moreover, the computation can often be efficiently vectorized when computing multiple correlation functions. For example to compute $\mathbb{E}[I_0 I_k]$ for various time bins $1 \leq k \leq N$, the states $\rho^2$ and $\rho^{12}$ remain null before time $t_k = k\Delta t$. The quantities $\mathbb{E}[I_0 I_k]$ can then be computed in a vectorized fashion by (i) evolving the states $(\rho_t, \rho_t^1)$ on $[0, t_1)$ with the one-point system, then (ii) evolving the resulting states $(\rho_t, \rho_t^1)$ with the Liouvillian on $[t_1, t_N)$, and saving the result $\left(\rho_{t_k}, \rho_{t_k}^1\right)$ at intermediate times $t_k$, and finally (iii) batch-compute the evolution of the N states $(\rho_t, \rho_t^1, \rho_t^2, \rho_t^{12})_k$ on $[t_k, t_{k+1})$ using the two-point system, initialised with the saved results $\left(\rho_{t_k}, \rho_{t_k}^1, 0, 0\right)$ from the previous step.

As will be appreciated, the above formulae may be generalised to compute correlation functions between signals from different detectors, that can be of jump and/or diffusive type. In the above, $j$ is now a set of test functions, one for each detector $j = \{j_\mu\}_{\mu \in [\![1, n_\mu]\!]}$, with $n_\mu$ the number of measured signals. Splitting detectors between those of jump-type $\mu \in S_{jump}$ and those of diffusive-type $\mu \in S_{diffusive}$, the new generator of the ODE $d\rho_t^j/dt = \mathcal{L}_t^j(\rho_t^j)$ described above is:

$$\mathcal{L}_t^j = \mathcal{L}_t + \sum_{\mu \in S_{jump}} (e^{j_{\mu,t}} - 1)\, \mathcal{C}_{L_{\mu,t}} + \sum_{\mu \in S_{diffusive}} \left(j_{\mu,t}\, \mathcal{C}_{L_{\mu,t}} + \frac{j_{\mu,t}^2}{2}\, \mathcal{I}\right),$$

where like notations take the same definitions as before.

**Numerical examples**

As discussed above, by preparing and measuring the quantum system 1 in two or more different dynamical configurations, certain parameters can be fit which would otherwise be non-identifiable.

For instance, another example of non-identifiability can be found in the system of Berdou, Camille, et al. "One hundred second bit-flip time in a two-photon dissipative oscillator." PRX Quantum 4.2 (2023): 020350, which is a bistable dynamical quantum system comprised of a structure similar to the qubit-hosting structure 6 of Figure 2, but having a heterodyne detector coupled to the first mode a (specifically a transmission line weakly coupled to the "memory" mode resonator).

In particular, the present Inventors have recognised that, for a fixed value of $\alpha^2$, it is practically impossible to independently estimate $\kappa_2$ and $\alpha_2$ from one-, two-, and three-point correlation functions of this system due to the antagonistic combination of (i) the measured signal being a symmetric stochastic process such that only even-order correlation functions are non-null (from a particular symmetry of the system arising from the action of the two-photon dissipation and one-photon loss, as discussed below) and (ii) different combinations of $\kappa_2$ and $\alpha_2$ resulting in almost indistinguishable two-point correlation functions due to the intractably high number of trajectories needed to achieve sufficiently low error bars.

Here, the dynamical configuration is formed of opposite phase coherent states, when the system has reached its steady state, which are dynamically stabilised in the cavity field (oscillatory mode a) of a cavity (i.e. a resonator portion), wherein the stabilisation is achieved via engineering two-photon dissipation between the cavity and the environment modelled by jump operator $L_2 = \sqrt{\kappa_2}\,(a^2 - \alpha_2^2)$, with two-photon dissipation rate $\kappa_2$, complex amplitude $\alpha_2$ which can be controlled by an external drive, and single-photon loss from the cavity at a rate $\kappa_1$ modelled by jump operator $L_1 = \sqrt{\kappa_1}\,a$, wherein $a$ denotes the annihilation operator of the cavity field. In this reduced model of the system which describes just the dynamics of the cavity, the Hamiltonian is $H = 0$.

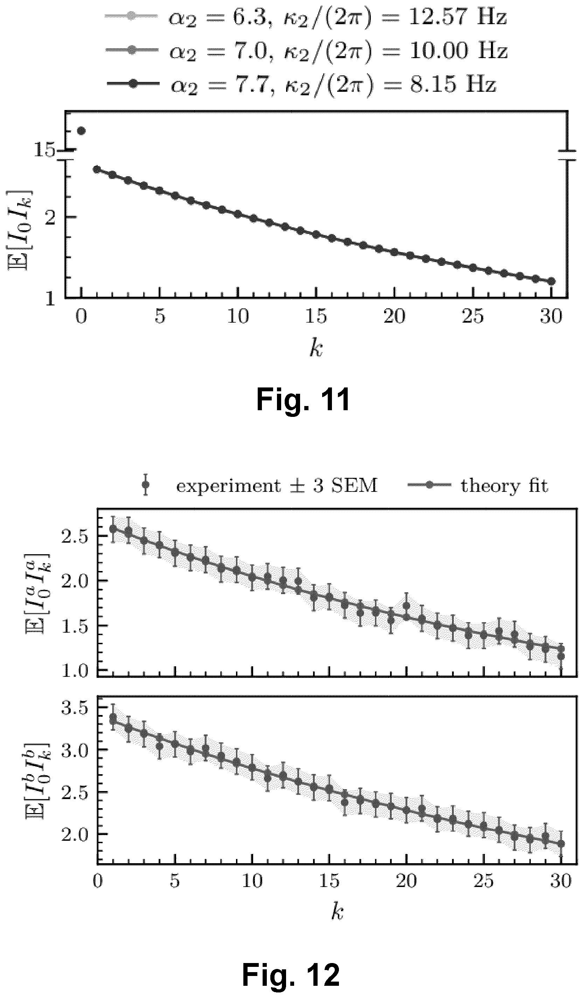

Figure 11 shows two-point correlation functions $\mathbb{E}[I_0 I_k]$ for three different combinations of $\alpha_2$ and $\kappa_2$. The parameters $\alpha_2$ and $\kappa_2$ cannot be estimated from the two-point correlation functions alone, as the different curves are superimposed so as to be entirely indistinguishable (i.e. statistically degenerate).

Although this degeneracy can be lifted by evaluating, e.g., the four-point correlation functions, accurately estimating high-order correlation functions becomes quickly prohibitively expensive in measurement time (due to the much greater standard error of the mean for a fixed number of measurements compared to lower-order correlation functions).

Instead, by changing the dynamical configuration, different two-point correlation functions can be resolved, as shown in Figure 12. Note that the "experimental" data used here was in fact modelled via simulating $10^5$ stochastic trajectories of a corresponding diffusive SME modelled to mimic experimental conditions, wherein the upper panel shows results for configuration "a" with $\alpha_2$ = 7.0 and the lower panel shows results for configuration "b" with $\alpha_2$ = 7.14. Similar "mimicked" experimental data provided from appropriate models have been used in Figures 11 and 13-14, and are merely provided for clarity in lieu of experimental data acquired in the lab.

In particular, for each trajectory (labelled "$j$"), we average the measured signals over 31 time bins of duration $\Delta t$ = $1/(2\kappa)$, to obtain two time-binned signals, one for each configuration: $\{I_0^{a,(j)}, ..., I_{30}^{a,(j)}\}$ and $\{I_0^{b,(j)}, ..., I_{30}^{b,(j)}\}$. We estimate the two-point correlation functions of the signals for non-coincident time bins $\mathbb{E}[I_0 I_k]$ $(1 \leq k \leq 30)$ by averaging over the $10^5$ trajectories. We then jointly fit the estimated correlation functions $\mathbb{E}[I_0^{a,b} I_k^{a,b}]$ with a least-squares method. For this example, we fit the binned signal correlation functions using the sharp signal formula approximation described above.

Thus, the present Inventors have recognised that the present invention is particularly suited to characterizing a quantum system 1 comprising one or more cat-qubit-hosting structure(s) 6, as discussed above in relation to Figures 2-4. Each of the one or more cat-qubit-hosting structures 6 comprise at least one resonant portion 9 configured to have a first mode a and a second mode b, and a signal generator 13,316 configured to input control signals to drive the second mode b such that, in combination with the non-linear element 7 and other control signal(s) input to the at least one resonant portion 9 and/or the non-linear element 7, the quantum system 1 is physically prepared in a first and subsequently a second dynamical configuration. For instance, the first and/or dynamical configurations may be a cat-state or a coherent state stabilized or prepared in one or more of the cat-qubit-hosting structures. What is important is that the dynamical configurations are different to each other.

Moreover, the present Inventors have recognised that, if the dynamical configuration is prepared using two-photon dissipation and one-photon loss only, all odd-order correlation functions are null. Thus, the first dynamical configuration may comprise preparing a cat-state in the cat-qubit-hosting structure 6 and physically measuring a first continuous signal from the cat-qubit-hosting structure 6. The method may thus comprise calculating only even-order correlation functions from the first dynamical configuration.

It may be useful to then break the symmetry which is what causes the null odd-order correlation functions, to also leverage the information in these odd-order correlation functions.

Thus, subsequently, the method may comprise adding a symmetry-breaking drive to the quantum system 1, such as a drive on the first mode a, to thereby prepare the quantum system in a second dynamical configuration and physically measure a second continuous signal from the cat-qubit-hosting structure 6. The method may thus comprise calculating both even- and odd-order correlation functions from the second dynamical configuration.

The cancellation of odd-order correlation functions can be generalized to any continuously measured system that satisfies conditions (i) that some traceless symmetry superoperator $\mathcal{S}$ commutes with the system's Liouvillian $[\mathcal{L}, \mathcal{S}]$ = 0 (such as parity superoperator $\mathcal{S} \equiv \mathcal{P}(\rho) = e^{i\pi a\dagger a} \rho e^{-i\pi a\dagger a}$ in the case of the above cat-qubit systems where a denotes the annihilation operator of the physical oscillatory mode a), and (ii) it anti-commutes with the signal correlation superoperator $\{\mathcal{C}_L, \mathcal{S}\}$ = 0.

Returning to quantum systems 1 suitable for stabilizing cat-qubits, as discussed above in relation to Figures 2-4, it is particularly advantageous to integrate the detector 8 with the signal generator used to drive the second mode b (e.g. source 13 in Figures 2-3, and source 316 in Figure 4). This strategy recognises that information which will inherently leak anyway through the transmission line used to transmit signals from source 13,316, and thus is designed to detect and use this information, thereby avoiding the need to place a detector elsewhere (which would introduce another leakage channel) and conveniently reducing the number of lines going to non-linear superconducting quantum circuit 3, 306.

Each of the one or more cat-qubit-hosting structures 6 therefore further comprise a detector 8 coupled to the at least one resonant portion 9 and configured to measure continuous signals output from the second mode b. For instance, in embodiments wherein the at least one resonant portion 9 comprises a first 29,320 and a second 31,322 resonant portion configured respectively to substantially host the first mode a and the second mode b, then the detector 8 may be coupled to the second resonant portion 31,322.

The present method thus synergistically makes use of the continuous signal inherently output through the transmission line of the signal generator used to drive the second mode b via detecting it using detector 8 couple thereto and fitting correlation functions as described above.

Importantly, the present Inventors have recognised that fitting the correlation functions when starting from a system state which is not the steady state gives additional information on the parameters, from fitting the time dynamics of the system.

Figure 13A shows one-point correlation functions of X- and P-quadrature binned signals in three different dynamical configurations (denoted by the three different columns). The system is a quantum system 1 for stabilizing a cat-qubit as described above in relation to Figure 2. Here, continuous signal in the form of fluorescence from the second "buffer" mode b output through coupler 23 and filter 25 is detected by detector 8. The top row shows theoretical data $\mathbb{E}_{\boldsymbol{\theta}}[I_k]$ (i.e. for "true" parameters $\theta_{true}$ which have been theoretically modelled here), the middle row shows data estimated "measured" data by averaging over many trajectories $\widehat{\mathbb{E}}_{\boldsymbol{\theta}}[I_k]$, and the bottom row shows the fit $\mathbb{E}_{\boldsymbol{\theta}_{fit}}[I_k]$ in light shades of the estimated "measured" data $\widehat{\mathbb{E}}_{\boldsymbol{\theta}}[I_k]$ in dark shades (same plot as the middle row).

Specifically, Figure 13A shows numerical proof-of-concept, wherein the dynamics of quantum system 1 of Figure 2 are described by: (i) Hamiltonian H which is the idealised ATS Hamiltonian at the so-called saddle point as discussed above plus some additional terms which enter due to the quantum system 1 being nonideal in reality (due to, e.g. fabrication imperfections and higher-order terms not taken into account when deriving $H_{ATS}$ above); and (ii) jump operators describing the loss channels from the first mode a and the second mode b, respectively $L_a$ and $L_b$. Namely:

$$H = g_2^* a^2 b^\dagger + g_2 a^{\dagger 2} b + \epsilon_b^* b + \epsilon_b b^\dagger + \epsilon_a^* a + \epsilon_a a^\dagger - \frac{K}{2} a^{\dagger 2} a^2 - \frac{K_6}{6} a^{\dagger 3} a^3,$$

$$L_a = \sqrt{\kappa_a}\, a, \qquad L_b = \sqrt{\kappa_b}\, b,$$

where $g_2$ is the two-photon exchange rate as described above, $\varepsilon_{a/b}$ are complex drives respectively on the first/second "memory"/"buffer" modes a/b (with real parts $\epsilon_{a/b}^x$ and imaginary parts $\epsilon_{a/b}^y$), K is the so-called self-Kerr on the first mode a, $K_6$ is the so-called order-6 self-Kerr on the first mode a, $\kappa_a$ is the single-photon loss rate from the first mode a, and $\kappa_b$ is the single-photon loss rate from the second mode b.

The second mode fluorescence is continuously measured by detector 8 by heterodyne detection along the X- and P-quadratures with efficiency $\eta$, resulting in two signals $I_t^X = dY_t^X/dt$ and $I_t^P = dY_t^P/dt$, with $Y_t^X = \sqrt{\eta\kappa_b/2}\, Tr[(b + b^\dagger)\rho_t]dt + dW_t^X$ and $Y_t^P = \sqrt{\eta\kappa_b/2}\, Tr[i(b^\dagger - b)\rho_t]dt + dW_t^P$, where $dW_t^X$ and $dW_t^P$ are independent Wiener processes. As will be appreciated, all the parameters can be fitted by the present invention, assuming the amplitude and phase of the drives to be configurable in that they can be switched on or off, scaled by a known factor, and rotated by a known angle. Here, $g_2$ is chosen real, such that we want to reconstruct the real vector with 10 parameters $\boldsymbol{\theta} = (g_2, \epsilon_b^x, \epsilon_b^y, \epsilon_a^x, \epsilon_a^y, K, K_6, \kappa_a, \kappa_b, \eta)$ (for the avoidance of doubt, here $\theta$ is a vector of parameters, and not the dark count rate described above in relation to the jump SME).

The amplification and digitisation chain of detector 8 converts the continuoustime analogue sharp signal $I_t^{X/P}$ into the discrete-time digitised signal, which here we take as binned signal $I_k^{X/P}$ with the k-th transfer function $f_k$ approximated by rectangular window $I_k^{X/P} = \frac{G}{\Delta t} \int_{k\Delta t}^{(k+1)\Delta t} dY_t^{X/P}$. Here the window is of duration $\Delta t = 4$ ns with the gain G of the acquisition chain being set to unity for this example (and which can be estimated independently by any number of known methods, such as by fitting the autocorrelation of the signals when the drives are switched off and $g_2 = 0$).

This heterodyne measurement is modelled by splitting the jump operator $L_b$ into two parts with halved rates $\kappa_b/2$, and considering the two signals as the result of homodyne measurement of each loss channel $L_b^X = \sqrt{\kappa_b/2}\, b$ and $L_b^P = \sqrt{\kappa_b/2}\, (-ib)$, which gives the same Lindblad dissipator $\mathcal{D}_{L_b}$.

Figure 13A fits one-point correlation functions (i.e. time-average) of the binned signals $\mathbb{E}\left[I_k^X\right]$ and $\mathbb{E}\left[I_k^P\right]$ at different time bins $k$. The one-point correlation function of the filtered signal can be found by integrating the system of two coupled ODEs as discussed above in relation to Figure 10A, solved from time 0 to $T$ greater than any time in the support of the filter transfer function $f$, with initial conditions $(\rho_{t=0}, \rho_{t=0}^1) = (\rho_0, 0)$, and the one-point correlation function is then $\mathbb{E}\left[I_f\right]$. In this case, for $\mathbb{E}\left[I_k^{X/P}\right]$ we integrate the system of ODEs of Figure 10A by setting rectangular transfer function $f$ = $(G/\Delta t)\mathbb{1}_{[k\Delta t, (k+1)\Delta t]}$ with end time $T = (k+1)\Delta t$ and loss channel $L = L_b^{X/P}$ depending on the quadrature. As discussed above, alternatively, one could directly integrate the timerefined average of the sharp signal against the filter function. Yet another alternative, as discussed above, is to approximate the binned signal with the sharp signal counterpart in the middle of the integration integral

$$\mathbb{E}[I_k] \approx \mathbb{E}\left[I_{t_k}\right] = Tr[\mathcal{C}_L e^{t_k \mathcal{L}}(\rho_0)]$$

with $t_k = k\Delta t + \Delta t/2$ (which leads to relative systematic errors of 0.5% as compared to fitting with the formula according to Figure 10A for this particular example).

In the example of Figure 13A, the fluorescence from second mode b is continuously measured for a duration of 200 ns, starting from vacuum, in: (i) a first dynamical configuration wherein only the second "buffer" mode b is driven; (ii) a second dynamical configuration wherein only the first "memory" mode is drive; and (iii) a third dynamical configuration wherein both modes are driven at the same time. To model the experimental data (which would be physically measured in practice) 250,000 stochastic trajectories were modelled for each drive configuration, for a total signal duration of 3 x 250,000 x 200 ns = 150 ms. The trajectories are sampled using the normalized first-order Rouchon method with step size $dt$ = $\Delta t/10$ = 0.4 ns. For efficiency, all trajectories are simulated simultaneously by stacking them in a single large array. We run the simulation on a GPU (an NVIDIA L40S card) using the dynamiqs library (https://github.com/dynamiqs/dynamiqs). The total runtime is approximately 2 minutes. We reiterate that this step is not needed experimentally, as the data is readily available from the experiment via steps 601-605 and 607-611 as described above in relation to Figure 6.

The system of two coupled ODEs as discussed above in relation to Figure 10A is used to fit the data $\widehat{\mathbb{E}}_{\boldsymbol{\theta}}[I_k]$, which is performed using the Levenberg-Marquardt algorithm from the SciPy library. The fitted vector of parameters $\theta_{fit}$ converges well to the true vector of parameters $\theta$, as seen in the bottom row of Figure 13A wherein $\widehat{\mathbb{E}}_{\boldsymbol{\theta}}[I_k]$ and $\mathbb{E}_{\boldsymbol{\theta}}[I_k]$ overlap, even when starting from a relatively far initial guess $\theta_{guess}$.

Figure 13B shows a table which summarises the result which thus characterizes quantum system 1 with the fitted parameters, their fitted value (given with a factor $/2\pi$ where applicable), the estimate from the proposed fitting procedure, and the relative error. The chosen $g_2$ and $\varepsilon_b$ correspond to a rate $k_2/2\pi$ = 3.60 MHz and an average memory photon number $\bar{n}$ = 1.3. The relative error for $\kappa_a$ is not indicated, as this parameter is statistically degenerate and not correctly estimated in this particular example, but which could be correctly estimated by performing the method in yet further dynamical configurations.

Figure 14 shows how the one-point correlation of the modelled sharp signal in the example of Figure 13 varies with each parameter, with the X/P quadratures indicated. For each row of Figure 14 the amplitude of a single parameter $\theta_i$ is varied ($0.7\theta_i$, $\theta_i$, $1.3\theta_i$) respectively indicated by light, medium, and dark shades, where the specific parameter is indicated in the y-axis label).

The above example is for a single cat-qubit system, however it could readily be extended to a quantum system 1 comprising a plurality of qubit-hosting structures 6 such as in Figure 4. For instance, for a two cat-qubit system the vector of parameters to fit could be $\theta = (\theta_{cat1}, \theta_{cat2}, \theta_{CX})$, where $\theta_{CX}$ is a set of two-qubit parameters describing the CNOT gate between two cat qubits as described above, and $\theta_{cat1/cat2}$ could each be the set of 10 parameters described above for each of the single-cat qubit system $\left(g_2, \epsilon_b^x, \epsilon_b^y, \epsilon_a^x, \epsilon_a^y, K, K_6, \kappa_a, \kappa_b, \eta\right)$.

Moreover, as will be understood, further parameters may be included depending on how the Hamiltonian and the loss jump operators describing the quantum system 1 are modelled. In particular, for the cat-qubit system including an ATS as the non-linear element 7 as described above in relation to Figure 2, the ATS may be flux-biased at a point other than at the $0 - \pi$ flux working point (also known as the "saddle point"). As will be appreciated, in the language of the common magnetic flux $\varphi_\Sigma$ and the differential magnetic flux $\varphi_\Delta$, a saddle point is a pair of fluxes satisfying $(\varphi_\Sigma, \varphi_\Delta) = (\pm\frac{\pi}{2}, \pm\frac{\pi}{2})$

in units of the flux quantum.

For instance, flux threaded through one of the loops may be non-zero and different to $\pi$ flux threaded through the other of the loops, in units of the flux quantum. By preparing at least one of the dynamical configurations of quantum system 1 wherein the ATS is flux biased at a point other than the 0 - $\pi$ flux working point, the Hamiltonian no longer has its "sin-sin" form as described above, such that other terms enter the modelled Hamiltonian (and therefore other physical parameters to be fitted) which are otherwise particularly small and/or insensitive at the 0 - $\pi$ flux working point. The present Inventors have recognised that this may lead to a richer probing of the parameter space of quantum system 1, and thus to a more accurate characterization.

**Claims**

1. A method of characterizing a quantum system, wherein the quantum system comprises one or more qubit-hosting structure(s), each of the one or more qubit-hosting structure(s) comprising: (I) at least one portion configured to have at least one physical oscillatory mode, (II) one or more signal generator(s) coupled to the at least one portion and configured to input control signals to physically prepare the quantum system in a dynamical configuration, and (III) a detector coupled to the at least one resonant portion and configured to measure continuous signals output from the at least one oscillatory mode to provide measurement signals from the quantum system;
   the method comprising:

   (i) physically preparing, with the one or more signal generator(s), the quantum system in a first dynamical configuration, wherein the first dynamical configuration is describable via a first stochastic master equation having a first plurality of physical parameters;
   (ii) physically measuring, with the detector, a continuous signal from the quantum system in the first dynamical configuration to provide a first measured continuous signal;
   (iii) repeating steps (i) and (ii) a plurality of times to provide a plurality of first measured continuous signals, and calculating one or more first correlation function(s) from the plurality of first measured continuous signals;
   (iv) physically preparing, with the one or more signal generator(s), the quantum system in a second dynamical configuration which is different to the first physical configuration, wherein the second dynamical configuration is describable via a second stochastic master equation having a second plurality of physical parameters, and wherein the quantum system is physically prepared in the second dynamical configuration such that a subset of the second plurality of physical parameters is a shared subset with a subset of the first plurality of physical parameters;
   (v) physically measuring, with the detector, a continuous signal from the quantum system in the second dynamical configuration to provide a second measured continuous signal;
   (vi) repeating steps (iv) and (v) a plurality of times to provide a plurality of second measured continuous signals, and calculating one or more second correlation function(s) from the plurality of second measured continuous signals;
   (vii) assigning values to the shared subset of physical parameters which characterizes the quantum system by jointly numerically fitting: (a) a first simulation of the one or more first correlation function(s), numerically simulated from the first stochastic master equation, to the calculated one or more first correlation function(s), and (b) a second simulation of the one or more second correlation function(s), numerically simulated from the second stochastic master equation, to the one or more second correlation function(s).

2. The method of claim 1, the method comprising:

   physically preparing, with the one or more signal generator(s), the quantum system in a third or further different dynamical configurations, wherein each of the third or further different dynamical configurations is describable via a third or further stochastic master equation having a third or further plurality of physical parameters, and wherein the quantum system is physically prepared in the third or further different dynamical configuration such that a subset of the third or further second plurality of physical parameters is part of the shared subset of physical parameters;
   physically measuring, with the detector, a continuous signal from the quantum system in the third or further different dynamical configurations to provide a third or further measured continuous signal;
   repeating said steps of physically preparing and physically measuring the third or further different dynamical configurations a plurality of times to provide a plurality of the third or further measured continuous signals, and calculating one or more third or further correlation function(s) from the plurality of the third or further measured continuous signals; and

wherein assigning values to the shared subset of physical parameters which characterizes the quantum system further comprises numerically fitting a third or further simulation, numerically simulated from the third or further stochastic master equation, to the one or more third or further correlation function(s).

3. The method of any preceding claim, wherein the one or more correlation function(s) is comprised of: one-point correlation functions, two-point correlation functions, and/or three-point correlation functions.

4. The method of any preceding claim, wherein at least one of the physically prepared dynamical configurations is a steady state of the quantum system, and wherein repeating said steps of physically preparing and physically measuring the quantum system in the steady state a plurality of times comprises:

   physically maintaining, with the one or more signal generator(s), the quantum system in the steady state for a single trajectory;
   physically measuring, with the detector, a continuous signal from the quantum system in the steady state to provide a steady state measured continuous signal; and
   dividing the steady state measured continuous signal into a plurality of sub-portions, and calculating the corresponding one or more correlation function(s) from the plurality of sub-portions.

5. The method of any preceding claim, wherein at least one of the physically prepared dynamical configurations is a steady state of the quantum system such that the stochastic master equation describing said at least one of the dynamical configurations has a time-constant Liouvillian $\mathcal{L}$; the method comprising:

   defining a plurality of $n$ time-bins of width $\Delta t$ from the measured continuous signal from said at least one of the dynamical configurations, wherein the width $\Delta t$ is a digitisation time of the acquisition chain of the detector;
   wherein numerically fitting the simulations of the one or more correlation function(s) of the steady state, the one or more correlation function(s) being $n$-point correlation function(s), comprises calculating the trace of an operator obtained by numerically evolving a numerically simulated initial state of the quantum system $\rho_0$ with a Lindblad evolution interspersed with the application of a correlation superoperator at the center $t'_k$ of each $k$-th time-bin from $t'_1$ to $t'_n$:

$$\mathbb{E}\left[I_{t'_1}\ldots I_{t'_n}\right] = Tr\left[\mathcal{C}_L e^{(t'_n - t'_{n-1})\mathcal{L}} \ldots \mathcal{C}_L e^{t'_1 \mathcal{L}}(\rho_0)\right],$$

   wherein L is the jump operator of the stochastic master equation describing said at least one of the dynamical configurations, $t'_k = k\Delta t + \Delta t/2$, and $\mathcal{C}_L(O)$ is the correlation superoperator for an operator $O$ and defined either by:

   (i) $\mathcal{C}_L(O) = \theta O + \eta L O L^\dagger$ if the detector has binary output with dark count rate $\theta \geq 0$ and detector efficiency and $0 < \eta \leq 1$, such that the stochastic master equation describing the steady state is of the jump type; or
   (ii)

$$\mathcal{C}_L(O) = \theta O + \eta L O L^\dagger$$

   if the detector has continuous output with detector efficiency and $0 < \eta \leq 1$, such that the stochastic master equation describing the steady state is of the diffuse type.

6. The method of any preceding claim, wherein at least one of the physically prepared dynamical configurations is a steady state of the quantum system such that the stochastic master equation describing said at least one of the dynamical configurations has a time-constant Liouvillian $\mathcal{L}$; the method comprises:

   defining a plurality of $n$ time-points from the measured continuous signal from said at least one of the dynamical configurations;
   wherein numerically fitting the simulations of the one or more correlation function(s) of the steady state, the one or more correlation function(s) being $n$-point correlation function(s), comprises computing the n-dimensional

integral of $\mathbb{E}\left[I_{t_1} \dots I_{t_n}\right]$ against a transfer function $f_n(t_n)$ of the acquisition chain of the detector for the $n$-th time-point, $\mathbb{E}\left[I_{f_1} \dots I_{f_n}\right] = \int_{t_1} \dots \int_{t_n} \mathbb{E}\left[I_{t_1} \dots I_{t_n}\right] f_n(t_n) \dots f_n(t_n) dt_1 \dots dt_n$, wherein $\mathbb{E}\left[I_{t_1} \dots I_{t_n}\right]$ is obtained by calculating the trace of an operator obtained by numerically evolving a numerically simulated initial state of the quantum system $\rho_0$ with a Lindblad evolution interspersed with the application of a correlation superoperator at each time-point from $t_1$ to $t_n$:

$$\mathbb{E}\left[I_{t_1} \dots I_{t_n}\right] = Tr\left[\mathcal{C}_L e^{(t_n - t_{n-1})\mathcal{L}} \dots \mathcal{C}_L e^{t_1 \mathcal{L}}(\rho_0)\right],$$

wherein L is the jump operator of the stochastic master equation describing said at least one of the dynamical configurations, and $\mathcal{C}_L$ (O) is the correlation superoperator for an operator O and defined either by:

(i) $\mathcal{C}_L(O) = \theta O + \eta L O L^\dagger$ if the detector has binary output with dark count rate $\theta \geq 0$ and detector efficiency and 0 < $\eta \leq 1$, such that the stochastic master equation describing the steady state is of the jump type; or
(ii)

$$\mathcal{C}_L(O) = \sqrt{\eta}(LO + OL^\dagger)$$

if the detector has continuous output with detector efficiency and 0 < $\eta \leq 1$, such that the stochastic master equation describing the steady state is of the diffuse type.

7. The method of any preceding claim, wherein numerically fitting at least one of the simulations of the one or more correlation function(s) of a given one of the dynamical configurations, the one or more correlation function(s) being $n$-point correlation function(s), comprises:

defining a plurality of $n$ time-points from the corresponding measured continuous signal from the given dynamical configuration;
assigning a transfer function $f_t$ of the acquisition chain of the detector at time-point $t$;
defining $j = \alpha_1 f_1 + \dots + \alpha_n f_n$ with $\{\alpha_1, \dots, \alpha_n\}$ real numbers;
deriving a system of $2^n$ coupled ordinary differential equations by forward differentiating an ordinary differential equation $d\rho_t^j / dt = \mathcal{L}_t^j(\rho_t^j)$, such that the system of $2^n$ coupled ordinary differential equations is describable by:

$$\frac{d\rho_t^{1,\dots,n}}{dt} = \left.\frac{\partial^n \left(\mathcal{L}_t^j(\rho_t^j)\right)}{\partial \alpha_1 \dots \partial \alpha_n}\right|_{\alpha_1,\dots,\alpha_n=0},$$

wherein $\rho_t^j$ is a generating density matrix at time-point $t$, and $\mathcal{L}_t^j$ is a superoperator defined either by:

(i)

$$\mathcal{L}_t^j = \mathcal{L}_t + (e^{jt} - 1)\mathcal{C}_L$$

if the stochastic master equation describing the given dynamical configuration is of the jump type, $\mathcal{C}_L$ (O) is a correlation superoperator for an operator O defined $\mathcal{C}_L(O) = \theta O + \eta L O L^\dagger$ if the detector has binary output with dark count rate $\theta \geq 0$ and detector efficiency and 0 < $\eta \leq 1$,

or

(ii)

$$\mathcal{L}_t^j = \mathcal{L}_t + j_t \mathcal{C}_L + j_t^2/2\,\mathcal{I}\,\text{i}$$

if the stochastic master equation describing the given dynamical configuration is of the diffusive type, with $\mathcal{I}$ the identify operator, and $\mathcal{C}_L$ ($O$) is a correlation superoperator for an operator $O$ defined

$$\mathcal{C}_L(O) = \sqrt{\eta}(LO + OL^\dagger)$$

if the detector has continuous output with detector efficiency and $0 < \eta \leq 1$;

solving the system of $2^n$ coupled ordinary differential equations from time $t = 0$ to time $T$, where $T$ is chosen to be greater than any time in the support of $f_1,...,f_n$, to thereby compute $\rho_T^{1,...,n}$ ; and

calculating the trace of $\rho_T^{1,...,n}$ to provide the simulations of the one or more correlation function(s)

$$\mathbb{E}\left[I_{f_1}...I_{f_n}\right] = Tr\left[\rho_T^{1,...,n}\right]$$

8. The method of claim 7, wherein transfer function $f_t$ of the acquisition chain of the detector at time-point $t$ is approximated by a rectangular function of width $\Delta t$, wherein the width $\Delta t$ is a digitisation time of the acquisition chain of the detector.

9. The method of any preceding claim, wherein, for each of the one or more qubit-hosting structure(s), the at least one portion is a resonant portion configured to have at least one resonant physical oscillatory mode, each of the one or more qubit-hosting structure(s) further comprises a non-linear element coupled to the at least one resonant portion so as to non-linearly couple to the at least one resonant physical oscillatory mode, and wherein the one or more signal generator(s) are coupled to the at least one resonant portion and/or to the non-linear element, and the detector is coupled to the at least one resonant portion or to the non-linear element and configured to measure continuous signals output from the at least one resonant physical oscillatory mode to provide measurement signals from the quantum system.

10. The method of claim 9, wherein quantum system is for hosting cat qubit;

wherein at least one of the one or more qubit-hosting structure(s) is a cat-qubit-hosting structure;
wherein the at least one resonant portion is configured to have a first resonant physical oscillatory mode and a second resonant physical oscillatory mode;
wherein the non-linear element coupled to the at least one resonant portion is configured to non-linearly couple the first resonant physical oscillatory mode and the second resonant physical oscillatory mode such that, under input control signals to the non-linear element, a two-to-one boson exchange is engineered between the first resonant physical oscillatory mode and the second resonant physical oscillatory mode;
wherein a signal generator of the one or more signal generator(s) is coupled to the at least one resonant portion, said signal generator being configured to drive the second resonant physical oscillatory mode; and
wherein the detector is coupled to the at least one resonant portion and configured to measure continuous signals output from the second resonant physical oscillatory mode.

11. The method of claim 10, wherein physically preparing, with the one or more signal generator(s), the quantum system in the first dynamical configuration comprises physically preparing a cat qubit hosted in the first resonant physical oscillatory mode;

wherein step (iii) comprises calculating only one or more non-null correlation function(s) from the first dynamical configuration which are even-order correlation functions; and
wherein, step (vii), numerically fitting the first simulation of the one or more first correlation function(s) comprises numerically simulating only one or more even-order correlation function(s).

12. The method of claims 10 or 11, wherein physically preparing different ones of the dynamical configurations comprises inputting, with the one or more signal generator(s), respectively different control signals to the quantum system, wherein the different control signals are configured to drive the first resonant physical oscillatory mode and/or second resonant physical oscillatory mode.

13. The method of any of claims 10-12, wherein the non-linear element is an asymmetrically threaded SQUID (ATS) comprised of a first superconducting loop and a second superconducting loop, wherein a signal generator of the one or more signal generator(s) is coupled to the ATS and configured to thread the first and second superconducting loops together with a common magnetic flux $\varphi_\Sigma$ and a differential magnetic flux $\varphi_\Delta$; and
wherein physically preparing different ones of the dynamical configurations comprises inputting, with said signal generator, respectively different pairs of common $\varphi_\Sigma$ and differential $\varphi_\Delta$ magnetic fluxes ($\varphi_\Sigma$, $\varphi_\Delta$), and wherein at least one of the pairs is not at a saddle point $(\varphi_\Sigma, \varphi_\Delta) \neq (\pm\frac{\pi}{2}, \pm\frac{\pi}{2})$.

14. The method of any preceding claim, wherein the quantum system comprises a plurality of qubit-hosting structures, wherein each of the qubit-hosting structures is respectively coupled to at least one other of the qubit-hosting structures by a multi-qubit linear coupling element or by a multi-qubit non-linear coupling element;
wherein the method comprises:

in at least one of physically prepared dynamical configurations, physically performing, with the one or more signal generator(s), a multi-qubit gate operation between a qubit hosted in one of the qubit-hosting structures and at least one other qubit hosted in at least one other of the qubit-hosting structures;
wherein at least one physical parameter of the shared subset of physical parameters is a physical parameter which characterizes the multi-qubit gate operation.

15. A quantum characterization unit comprising

a quantum system comprising:
one or more qubit-hosting structure(s), each of the one or more qubit-hosting structure(s) comprising:

(I) at least one portion configured to have at least one physical oscillatory mode,
(II) one or more signal generator(s) coupled to the at least one portion and configured to input control signals to physically prepare the quantum system in a dynamical configuration, and
(III) a detector coupled to the at least one resonant portion and configured to measure continuous signals output from the at least one oscillatory mode to provide measurement signals from the quantum system; and

a command circuit coupled to the quantum system, the command circuit being configured to:

(i) physically prepare, with the one or more signal generator(s), the quantum system in a first dynamical configuration, wherein the first dynamical configuration is describable via a first stochastic master equation having a first plurality of physical parameters;
(ii) physically measure, with the detector, a continuous signal from the quantum system in the first dynamical configuration to provide a first measured continuous signal;
(iii) repeat steps (i) and (ii) a plurality of times to provide a plurality of first measured continuous signals, and calculate one or more first correlation function(s) from the plurality of first measured continuous signals;
(iv) physically prepare, with the one or more signal generator(s), the quantum system in a second dynamical configuration which is different to the first physical configuration, wherein the second dynamical configuration is describable via a second stochastic master equation having a second plurality of physical parameters, and wherein the quantum system is physically prepared in the second dynamical configuration such that a subset of the second plurality of physical parameters is a shared subset with a subset of the first plurality of physical parameters;
(v) physically measure, with the detector, a continuous signal from the quantum system in the second dynamical configuration to provide a second measured continuous signal;
(vi) repeat steps (iv) and (v) a plurality of times to provide a plurality of second measured continuous signals, and calculating one or more second correlation function(s) from the plurality of second measured continuous signals;

(vii) assign values to the shared subset of physical parameters which characterizes the quantum system by jointly numerically fitting: (a) a first simulation of the one or more first correlation function(s), numerically simulated from the first stochastic master equation, to the calculated one or more first correlation function(s), and (b) a second simulation of the one or more second correlation function(s), numerically simulated from the second stochastic master equation, to the one or more second correlation function(s).

**Fig. 1**

**Fig. 2**

Fig. 3A

Fig. 3B

Fig. 4

**Fig. 5**

**Fig. 6**

$$I_k = \int_{k\Delta t}^{(k+1)\Delta t} f_k(t) I_t \, \mathrm{d}t \longrightarrow \{I_0, I_1, I_2, \ldots, I_N\}$$

## Fig. 7

$$I_{k_1}^{(1)} I_{k_2}^{(1)} I_{k_3}^{(1)}$$

$$+$$

$$I_{k_1}^{(2)} I_{k_2}^{(2)} I_{k_3}^{(2)}$$

$$+$$

$$\vdots$$

$$+$$

$$I_{k_1}^{(n_{\exp})} I_{k_2}^{(n_{\exp})} I_{k_3}^{(n_{\exp})}$$

$$=$$

$$n_{\exp} \hat{\mathbb{E}}[I_{k_1} I_{k_2} I_{k_3}]$$

## Fig. 8

sharp signal $I_\ell$      filtered signal $I_k$

parameters
$(\theta_1, \ldots, \theta_p)$

correlation
functions
$\mathbb{E}\left[I_{k_1} \ldots I_{k_n}\right]$

**Fig. 9**

$$\begin{bmatrix} \dot{\rho} \\ \dot{\rho}^1 \end{bmatrix} = \begin{bmatrix} \mathcal{L} & \cdot \\ f_1 \mathcal{C}_L & \mathcal{L} \end{bmatrix} \begin{bmatrix} \rho \\ \rho^1 \end{bmatrix}$$

**Fig. 10A**

$$\begin{bmatrix} \dot{\rho} \\ \dot{\rho}^1 \\ \dot{\rho}^2 \\ \dot{\rho}^{12} \end{bmatrix} = \begin{bmatrix} \mathcal{L} & \cdot & \cdot & \cdot \\ f_1 \mathcal{C}_L & \mathcal{L} & \cdot & \cdot \\ f_2 \mathcal{C}_L & \cdot & \mathcal{L} & \cdot \\ f_1 f_2 \mathcal{C}_L & f_2 \mathcal{C}_L & f_1 \mathcal{C}_L & \mathcal{L} \end{bmatrix} \begin{bmatrix} \rho \\ \rho^1 \\ \rho^2 \\ \rho^{12} \end{bmatrix}$$

**Fig. 10B**

$$\begin{bmatrix} \dot{\rho} \\ \dot{\rho}^1 \\ \dot{\rho}^2 \\ \dot{\rho}^{12} \end{bmatrix} = \begin{bmatrix} \mathcal{L} & \cdot & \cdot & \cdot \\ f_1 \mathcal{C}_L & \mathcal{L} & \cdot & \cdot \\ f_2 \mathcal{C}_L & \cdot & \mathcal{L} & \cdot \\ f_1 f_2 & f_2 \mathcal{C}_L & f_1 \mathcal{C}_L & \mathcal{L} \end{bmatrix} \begin{bmatrix} \rho \\ \rho^1 \\ \rho^2 \\ \rho^{12} \end{bmatrix}$$

**Fig. 10C**

$$\begin{bmatrix} \dot{\rho} \\ \dot{\rho}^1 \\ \dot{\rho}^2 \\ \dot{\rho}^3 \\ \dot{\rho}^{12} \\ \dot{\rho}^{13} \\ \dot{\rho}^{23} \\ \dot{\rho}^{123} \end{bmatrix} = \begin{bmatrix} \mathcal{L} & \cdot & \cdot & \cdot & \cdot & \cdot & \cdot & \cdot \\ f_1 \mathcal{C}_L & \mathcal{L} & \cdot & \cdot & \cdot & \cdot & \cdot & \cdot \\ f_2 \mathcal{C}_L & \cdot & \mathcal{L} & \cdot & \cdot & \cdot & \cdot & \cdot \\ f_3 \mathcal{C}_L & \cdot & \cdot & \mathcal{L} & \cdot & \cdot & \cdot & \cdot \\ f_1 f_2 \mathcal{C}_L & f_2 \mathcal{C}_L & f_1 \mathcal{C}_L & \cdot & \mathcal{L} & \cdot & \cdot & \cdot \\ f_1 f_3 \mathcal{C}_L & f_3 \mathcal{C}_L & \cdot & f_1 \mathcal{C}_L & \cdot & \mathcal{L} & \cdot & \cdot \\ f_2 f_3 \mathcal{C}_L & \cdot & f_3 \mathcal{C}_L & f_2 \mathcal{C}_L & \cdot & \cdot & \mathcal{L} & \cdot \\ f_1 f_2 f_3 \mathcal{C}_L & f_2 f_3 \mathcal{C}_L & f_1 f_3 \mathcal{C}_L & f_1 f_2 \mathcal{C}_L & f_3 \mathcal{C}_L & f_2 \mathcal{C}_L & f_1 \mathcal{C}_L & \mathcal{L} \end{bmatrix} \begin{bmatrix} \rho \\ \rho^2 \\ \rho^3 \\ \rho^1 \\ \rho^{12} \\ \rho^{13} \\ \rho^{23} \\ \rho^{123} \end{bmatrix}$$

**Fig. 10D**

$$\begin{bmatrix} \dot{\rho} \\ \dot{\rho}^1 \\ \dot{\rho}^2 \\ \dot{\rho}^3 \\ \dot{\rho}^{12} \\ \dot{\rho}^{13} \\ \dot{\rho}^{23} \\ \dot{\rho}^{123} \end{bmatrix} = \begin{bmatrix} \mathcal{L} & \cdot & \cdot & \cdot & \cdot & \cdot & \cdot & \cdot \\ f_1 \mathcal{C}_L & \mathcal{L} & \cdot & \cdot & \cdot & \cdot & \cdot & \cdot \\ f_2 \mathcal{C}_L & \cdot & \mathcal{L} & \cdot & \cdot & \cdot & \cdot & \cdot \\ f_3 \mathcal{C}_L & \cdot & \cdot & \mathcal{L} & \cdot & \cdot & \cdot & \cdot \\ f_1 f_2 & f_2 \mathcal{C}_L & f_1 \mathcal{C}_L & \cdot & \mathcal{L} & \cdot & \cdot & \cdot \\ f_1 f_3 & f_3 \mathcal{C}_L & \cdot & f_1 \mathcal{C}_L & \cdot & \mathcal{L} & \cdot & \cdot \\ f_2 f_3 & \cdot & f_3 \mathcal{C}_L & f_2 \mathcal{C}_L & \cdot & \cdot & \mathcal{L} & \cdot \\ \cdot & f_2 f_3 & f_1 f_3 & f_1 f_2 & f_3 \mathcal{C}_L & f_2 \mathcal{C}_L & f_1 \mathcal{C}_L & \mathcal{L} \end{bmatrix} \begin{bmatrix} \rho \\ \rho^1 \\ \rho^2 \\ \rho^3 \\ \rho^{12} \\ \rho^{13} \\ \rho^{23} \\ \rho^{123} \end{bmatrix}$$

**Fig. 10E**

**Fig. 11**

**Fig. 12**

Fig. 13A

| | Parameter | Value | Estimated | Error |
|---|---|---|---|---|
| $g_2$ | Two-photon exchange rate | 6.00 MHz | 6.06 MHz | 1.00% |
| $\epsilon_b^x$ | Buffer drive (real part) | 5.00 MHz | 5.00 MHz | 0.00% |
| $\epsilon_b^y$ | Buffer drive (imaginary part) | 6.00 MHz | 6.02 MHz | 0.33% |
| $\epsilon_a^x$ | Memory drive (real part) | 3.00 MHz | 2.96 MHz | 1.33% |
| $\epsilon_a^y$ | Memory drive (imaginary part) | 4.00 MHz | 3.96 MHz | 1.00% |
| $K$ | Memory self-Kerr | 200 kHz | 199 kHz | 0.50% |
| $K_6$ | Memory higher-order self-Kerr | 40.0 kHz | 40.9 kHz | 2.25% |
| $\kappa_a$ | Memory single-photon loss rate | 20.0 kHz | 48.4 KHz | – |
| $\kappa_b$ | Buffer single-photon loss rate | 40.0 MHz | 40.6 MHz | 1.50% |
| $\eta$ | Measurement efficiency | 0.300 | 0.305 | 1.67% |

Fig. 13B

Fig. 14

| | Europäisches Patentamt<br>European Patent Office<br>Office européen des brevets | **EUROPEAN SEARCH REPORT** | **Application Number**<br>EP 24 30 6625 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAMMELMARK SØREN ET AL: "Bayesian parameter inference from continuously monitored quantum systems", PHYSICAL REVIEW A (ATOMIC, MOLECULAR, AND OPTICAL PHYSICS), vol. 87, no. 3, 22 December 2012 (2012-12-22), XP093259616, USA ISSN: 1050-2947, DOI: 10.1103/PhysRevA.87.032115 Retrieved from the Internet: URL:https://arxiv.org/pdf/1212.5700> * the whole document * ----- | 1-15 | INV.<br>G06N10/20<br>G06N10/40<br><br>ADD.<br>G06F111/10<br>G06F30/20 |
| A | RALPH JASON F ET AL: "Classical Tracking for Quantum Trajectories", 2021 IEEE 24TH INTERNATIONAL CONFERENCE ON INFORMATION FUSION (FUSION), INTERNATIONAL SOCIETY OF INFORMATION FUSION (ISIF), 1 November 2021 (2021-11-01), pages 1-8, XP034037651, [retrieved on 2021-11-24] * the whole document * ----- | 1-15 | |
| A | \'ELIE GENOIS ET AL: "Quantum-tailored machine-learning characterization of a superconducting qubit", ARXIV.ORG, CORNELL UNIVERSITY LIBRARY, 201 OLIN LIBRARY CORNELL UNIVERSITY ITHACA, NY 14853, 24 June 2021 (2021-06-24), XP081994696, * the whole document * ----- -/-- | 1-15 | |

**TECHNICAL FIELDS SEARCHED (IPC)**

G06N
G06F

The present search report has been drawn up for all claims

| Place of search | Date of completion of the search | Examiner |
|---|---|---|
| The Hague | 27 March 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..................................................................................

& : member of the same patent family, corresponding document

EPO FORM 1503 03.82 (P04C01)

**page 1 of 2**

| Europäisches Patentamt European Patent Office Office européen des brevets | **EUROPEAN SEARCH REPORT** | Application Number EP 24 30 6625 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HENRIK GLAVIND CLAUSEN ET AL: "Online Maximum Likelihood Parameter Estimation for Continuously-Monitored Quantum Systems", ARXIV.ORG, CORNELL UNIVERSITY LIBRARY, 201 OLIN LIBRARY CORNELL UNIVERSITY ITHACA, NY 14853, 7 March 2024 (2024-03-07), XP091695001, * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 27 March 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................................
& : member of the same patent family, corresponding document

EPO FORM 1503 03.82 (P04C01)

## REFERENCES CITED IN THE DESCRIPTION

**Patent documents cited in the description**

- EP 23175147
- EP 23306839
- EP 21306965
- EP 22306815
- EP 22306816

**Non-patent literature cited in the description**

- **BERDOU, CAMILLE et al.** One hundred second bit-flip time in a two-photon dissipative oscillator. *PRX Quantum*, 2023, vol. 4 (2), 020350
- **MABUCHI, HIDEO**. Dynamical identification of open quantum systems. *Quantum and SemiclassicalOptics: Journal of the European Optical Society Part 8*, 1996, vol. 8 (6), 1103
- **TILLOY, ANTOINE**. Exact signal correlators in continuous quantum measurements. *Physical Review A*, 2018, vol. 98 (1), 010104
- **GUILMIN, PIERRE** ; **PIERRE ROUCHON** ; **ANTOINE TILLOY**. Correlation functions for realistic continuous quantum measurement. *IFAC-PapersOnLine*, 2023, vol. 56 (2), 5164-5170
- **P. ARRANGOIZ-ARRIOLA** ; **E. A. WOLLACK** ; **Z. WANG** ; **M. PECHAL** ; **W. JIANG** ; **T. P. MCKENNA** ; **J. D. WITMER** ; **R. VAN LAER** ; **A. H. SAFAVI-NAEINI**. Resolving the energy levels of a nanomechanical oscillator. *Nature*, 2019, vol. 571, 537
- **KOUNALAKIS, MARIOS** ; **GERRIT EW BAUER** ; **YAROSLAV M. BLANTER**. Analog quantum control of magnonic cat states on a chip by a superconducting qubit. *Physical review letters*, 2022, vol. 129 (3), 037205
- **KOZIN, VALERII K. et al.** Quantum phase transitions and cat states in cavity-coupled quantum dots. *Physical review research*, 2024, vol. 6 (3), 033188
- **LESCANNE, RAPHAËL et al.** Exponential suppression of bit-flips in a qubit encoded in an oscillator. *Nature Physics*, 2020, vol. 16 (5), 509-513
- **ROUCHON, PIERRE**. A tutorial introduction to quantum stochastic master equations based on the qubit/photon system. *Annual Reviews in Control*, 2022, vol. 54, 252-261
- **JACOBS, KURT** ; **DANIEL A. STECK**. A straightforward introduction to continuous quantum measurement. *Contemporary Physics*, 2006, vol. 47 (5), 279-303
- **PAULI VIRTANEN et al.** SciPy 1.0: Fundamental Algorithms for Scientific Computing in Python. *Nature Methods*, 2020, vol. 17